# FASCICULE DE BREVET EUROPEEN

(11) **EP 2 609 993 B1**
(45) Date de publication et mention de la délivrance du brevet: **20.05.2015**
(21) Numéro de dépôt: 12199378.6
(22) Date de dépôt: 26.12.2012
(51) Int. Cl.: B01D 69/02, G01N 27/447, B01D 57/02, B01D 61/42, B01L 3/00

(54) **Dispositif nano et micro fluidique pour la séparation et concentration de particules présentes dans un fluide**
Nano- und mikro-fluidische Vorrichtung für die Trennung und Konzentration von in einem Fluid vorhandenen Partikeln
Micro and nano fluid device for separating and concentrating particles contained in a fluid

(30) Priorité: 27.12.2011 FR 1162468
(43) Date de publication de la demande: 03.07.2013
(73) Titulaire: Commissariat à l'Énergie Atomique et aux Énergies Alternatives, 75015 Paris (FR)
(72) Inventeur: AIZEL, Koceila, 92160 ANTONY (FR); FOUILLET, Yves, 38340 VOREPPE (FR)
(74) Mandataire: Ilgart, Jean-Christophe

(56) Documents cités:
- WO-A1-97/47370
- WO-A1-98/46325
- WO-A2-2006/081270
- US-A- 5 839 467

## Description

### DOMAINE TECHNIQUE

L'invention concerne un dispositif pour la séparation et la concentration de particules présentes dans un fluide.

Plus précisément, l'invention a trait à la séparation et concentration de particules présentes dans un fluide par passage depuis au moins un microcanal à travers au moins un nanocanal en mettant en oeuvre une filtration stérique et/ou une filtration ionique sélective.

On précise ici que dans le cadre de l'invention, on entend par microcanal, un canal fluidique de hauteur d'ordre micrométrique, c'est-à-dire typiquement un canal dont la hauteur ou autrement dit la profondeur est de l'ordre de quelques dizaines de µm (micromètres). Typiquement également, un microcanal a une largeur de l'ordre d'une cinquantaine à une centaine de µm (micromètres).

On précise ici également que dans le cadre de l'invention, on entend par nanocanal, un canal fluidique de hauteur ou autrement dit la profondeur d'ordre nanométrique, c'est-à-dire typiquement un canal dont la hauteur est inférieure égale à 100 nm (nanomètres).

On précise que dans le cadre de l'invention, on entend par particules des nanoparticules mais également des microparticules. Par nanoparticules, on entend des particules généralement (mais pas uniquement) sphériques dont le diamètre moyen unitaire est inférieur à 100 nm environ, conformément à la norme ISO TS/27687. Avantageusement, la taille des particules destinées à être séparées et concentrées par le dispositif selon l'invention peut être de quelques dizaines à une centaine de nanomètres, typiquement comprises entre 50 et 120 nm. Ces dernières dimensions sont en effet représentatives de certaines particules biologiques telles que les virus, l'ADN ainsi que de certaines particules développées pour des applications d'imagerie médicale.

### ART ANTÉRIEUR

Pour concentrer et séparer des particules présentes dans un fluide, il est connu qu'il est possible théoriquement d'utiliser l'effet stérique tel quel et donc de faire passer le fluide dans un nanocanal que l'on sait fabriquer.

Or, il est aussi établi qu'à l'échelle de la micro et nano fluidique, le contrôle des écoulements de fluides peut s'avérer difficile. Ainsi, les dimensions des nanocanaux étant inférieures à la centaine de nanomètre, les résistances hydrauliques à considérer sont très importantes. Donc, si l'on cherche à faire passer directement un fluide depuis un microcanal vers un nanocanal par injection hydrodynamique, il faut fournir des pressions très fortes pour atteindre des débits Q₁ qui resteront toujours très faibles, de l'ordre de quelques nanolitres par minute (nl/min).

On précisé que par injection hydrodynamique on entend ici et dans le cadre de l'invention une injection de fluide dans un circuit fluidique uniquement par l'application d'une différence de pression (surpression, aspiration ou gravité) entre l'entrée et la sortie du circuit.

On précise de même que par injection électrocinétique on entend une injection de fluide par application d'une tension électrique dans un circuit fluidique, afin de permettre le déplacement d'espèces chargées électriquement et présentes dans le circuit sous l'effet du champ électrique ainsi créé avec des vitesses de déplacement qui sont fonctions de leurs charges. La technique utilisée peut être une électro-osmose ou une électrophorèse.

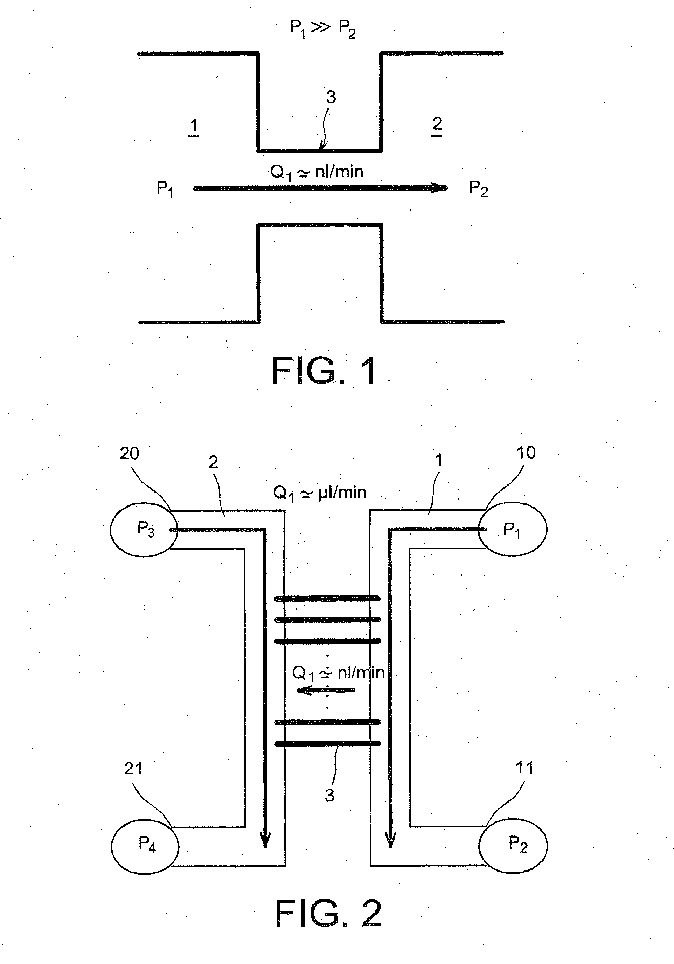

Ainsi, en mode d'injection hydrodynamique, il faut des temps très longs pour faire passer des volumes de quelques millilitres (ml). Une telle configuration est schématisée en figure 1 : pour faire passer un fluide du microcanal d'entrée 1 au microcanal de sortie 2 à travers le nanocanal 3, il est nécessaire d'appliquer des pressions P1 très supérieures dans le microcanal d'entrée 1 par rapport à celles P2 dans le microcanal de sortie 2. En outre, des bulles d'air peuvent être piégées rendant le remplissage du nanocanal 3 encore plus difficile. Enfin, des particules présentes dans le fluide peuvent s'accumuler à l'entrée du nanocanal 3 et venir ainsi le boucher.

Pour pallier à ces difficultés, il a déjà été proposé des systèmes ce que l'on désigne communément comme des dispositifs « by-pass » et que l'on retrouve régulièrement dans la littérature.

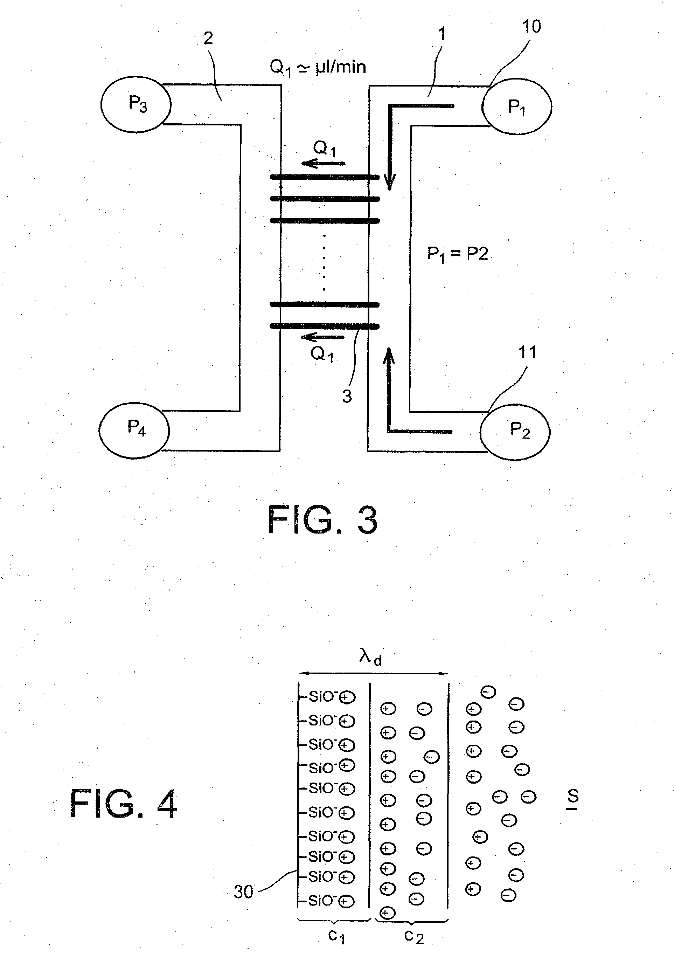

Un tel dispositif by-pass est représenté schématiquement en figure 2 : il consiste en deux microcanaux 1, 2 en parallèle l'un de l'autre et reliés entre eux par un ou plusieurs nanocanal(aux) 3, chaque microcanal 1, 2 étant relié à une entrée de fluide 10, 20 et une sortie 11, 21. Autrement dit, le fluide s'écoule à travers dans chaque microcanal 1 ou 2 depuis son entrée respectivement 10 ou 20 à une pression donnée respectivement P1 ou P3 jusqu'à sa sortie respectivement 11 ou 21 à une pression respectivement P2 ou P4, et ce avec un débit Q de l'ordre de quelques microlitres par minute (µl/min). Le fluide s'écoule également à travers le(les) nanocanal(ux) 3 avec un débit Q₁ de l'ordre de quelques nl/min en étant dérivé du microcanal 1 vers le microcanal 2. Un tel dispositif bypass connu est avantageux car il permet de manipuler, via les microcanaux 1, 2, des volumes de liquide plus importants et à plus haut débit (Q de l'ordre de plusieurs µl/min). On peut donc remplir les nanocanaux plus facilement et purger les éventuelles bulles d'air plus facilement sans avoir à appliquer des pressions énormes. En revanche, un tel dispositif by-pass présente un certain nombre d'inconvénients que l'on résumer ainsi :
- la hauteur des nanocanaux 3 est figée et déterminée lors des étapes de fabrication technologiques ;
- des petites fuites suffisent à déstabiliser le système. Ainsi, par exemple, si l'on veut induire un flux stable Q₁ dans les nanocanaux 3 en appliquant des pressions identiques (P₁=P₂) aux deux extrémités 10 et 11 d'un des microcanaux 1, qui constituent alors toutes deux des entrées, comme symbolisé en figure 3, alors une simple fuite est susceptible d'engendrer des fluctuations de pression (P₁≠P₂) elles-mêmes susceptibles de déstabiliser le flux Q₁ à travers les nanocanaux 3.

Dans la demande de brevet US 2011/0198225 il est connu un autre dispositif by-pass consistant en la jonction de microcanaux entre eux par le biais d'un ou plusieurs nanocanaux. Une différence de potentiel électrique est appliquée aux extrémités du microcanal, dit microcanal d'échantillonnage, par lequel le fluide à échantillonner s'écoule, tandis que les microcanaux, dits tampons, en parallèle du microcanal d'échantillonnage et reliés à celui-ci par les nanocanaux, et dans lesquels est présent un fluide tampon, sont mis à la terre. Une zone de déplétion ionique est ainsi créée au niveau du microcanal d'échantillonnage qui agit comme une barrière électrostatique à tout type d'espèces chargées électriquement.

Le phénomène physique ainsi exploité est dénommé polarisation de concentration d'ions, en anglais « Ion Concentration Polarization » (acronyme ICP en anglais). On rappelle ici ce phénomène physique en référence aux figures 4 à 6D.

On précise que sur ces figures les espèces ioniques chargée négativement sont symbolisées par un signe négatif tandis que celles chargées positivement sont symbolisées par un signe positif.

On rappelle tout d'abord le principe de superposition de la double couche dite de Debye, à proximité d'un substrat 30. Tel que représenté en figure 4, une solution tampon S dans laquelle sont présents des ions positifs et négatifs vient épouser la paroi du substrat 30, en silice sur la figure 4 (espèces SiO⁻), selon une double-couche de Debye C1, C2 d'épaisseur totale notée λd.

Une première couche d'ions C₁ d'une première polarité opposée (positive dans l'exemple représenté) à celle des espèces ioniques présentes en surface, se fixe au voisinage de ladite surface. Une seconde couche C2 se forme comportant des espèces ioniques mobiles. La seconde couche C2 comporte des ions, de la dite première polarité, qui migrent au voisinage de la première couche C1. Elle comporte également des ions de polarité opposée (négative), pour équilibrer la charge. Cette première couche C1 sert à écranter le potentiel de surface (ici négatif), écrantage complété par la seconde couche C2. Cette double couche, dite la double couche de Debye a une épaisseur λd, qui varie en fonction de la salinité de la solution.

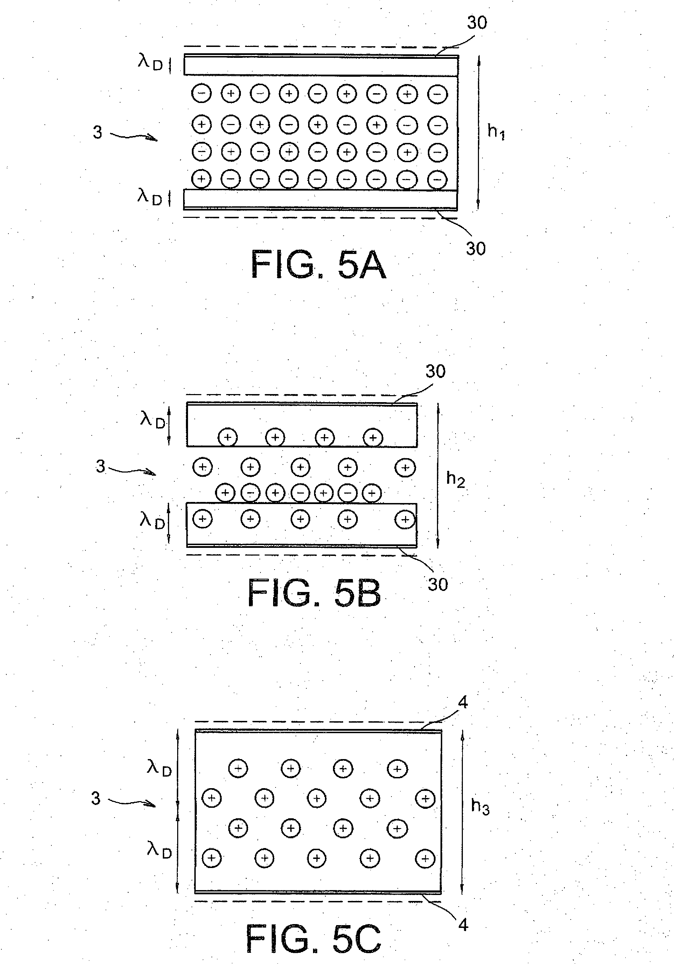

L'épaisseur d'une double couche de Debye varie de 1nm à une centaine de nanomètres selon le liquide tampon S considéré. En effet, plus la salinité du liquide tampon est faible plus l'épaisseur de la double couche de Debye est importante. Ainsi, si un canal fluidique a au moins une de ses dimensions de l'ordre des dimensions de la double couche de Debye, alors les doubles couches du canal peuvent se superposer et ce canal devient sélectif à un type d'ion (anion ou cation) selon la charge de surface du matériau considéré. En effet, dans ces conditions, la charge de surface devient prédominante et va donc repousser les ions de même charge et attirer les ions de charge opposée. On met donc ici en évidence un phénomène électrostatique de perméabilité sélective ionique, connu sous la dénomination en anglais "ion perm-selectivity". Ce phénomène de perméabilité sélective ionique peut être obtenu soit en réduisant la hauteur du canal fluidique pour qu'elle atteigne les épaisseurs des double couches de Debye soit en diminuant la salinité du liquide tampon pour que l'épaisseur de la double couche de Debye atteigne la hauteur du canal. En figures 5A à 5C, on a symbolisé trois situations de hauteurs de canal ou de salinités dans un canal 40 formé entre deux substrats 30 chargés négativement en surface, c'est-à-dire dans un canal perméable aux cations : la hauteur du canal 3 est décroissante de la figure 5A à la figure 5C (h1>h₂>h₃). Cela pourrait être également le cas de la salinité du liquide tampon. Dans la situation de la figure 5C, la perméabilité sélective ionique est atteinte car la hauteur h3 du canal 3 est égale à 2* λd soit l'épaisseur des deux doubles couches de Debye superposées l'une sur l'autre. Typiquement, pour un canal 3 délimité par deux substrats 30 en silice et en contact avec un liquide tampon d'eau déionisée, il faut avoir une des dimensions du canal (hauteur h3) inférieure ou égale à environ 100 nm.

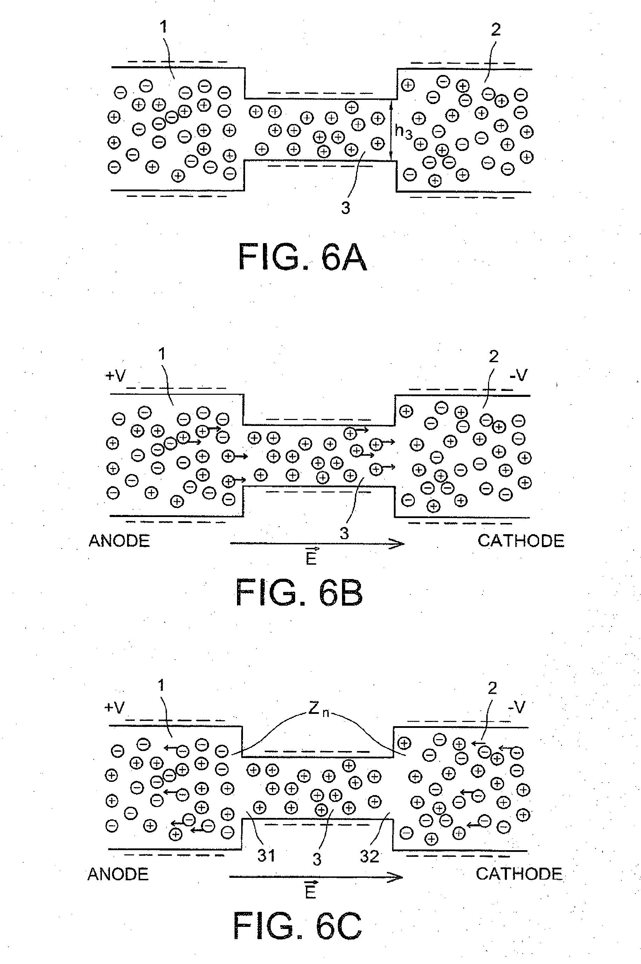

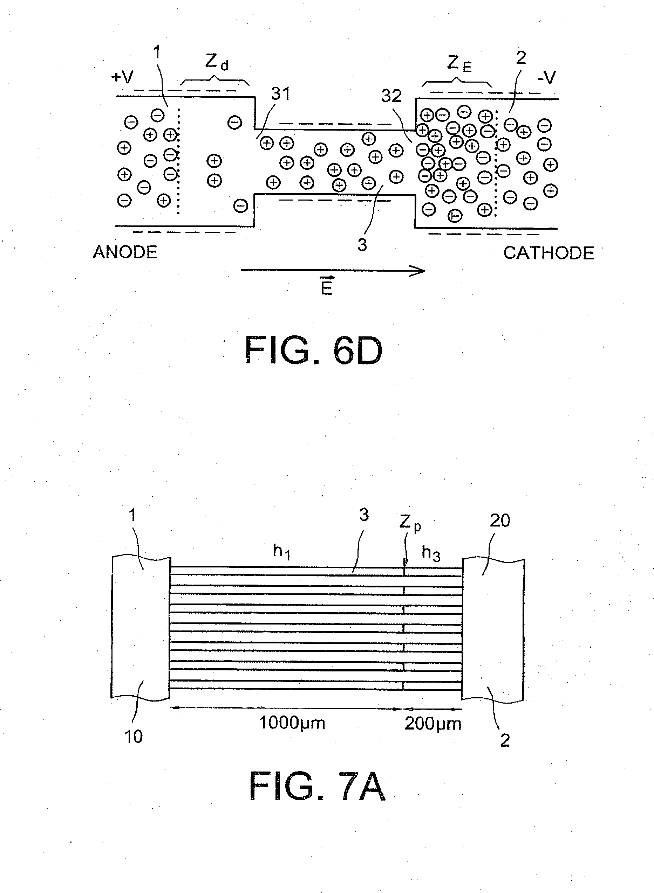

On explique maintenant en référence aux figures 6A à 6D, le phénomène ICP pour de l'eau déionisée à la jonction entre un ou plusieurs nanocanaux 3 et deux microcanaux 1, 2, la perméabilité sélective ionique pouvant étant atteinte dans le nanocanal 3. La hauteur h3 du nanocanal est donc de l'ordre de 100 nm. On précise que le nanocanal 3 et les microcanaux 1, 2 sont réalisés dans des substrats en silice : sans application de champ électrique,

La figure 6A représente un nanocanal perméable aux cations, communiquant avec deux microcanaux respectivement en amont et en aval du microcanal. Lorsqu'on applique un champ électrique entre l'entrée et la sortie du nanocanal (figure 6B), les cations sont pompés à travers le nanocanal en direction de la cathode. Progressivement, au voisinage des extrémités Z_{N}, l'électroneutralité est localement brisée. (figure 6C).

Pour rétablir l'électroneutralité, une zone d'appauvrissement ionique , ou zone de déplétion Z_{d} se forme du côté de l'anode, tandis qu'une zone d'enrichissement ionique Z_{E} apparaît au niveau de la cathode.

De ce fait, toute arrivée supplémentaire de charge électrique est donc empêchée afin de maintenir l'électroneutralité dans la zone de déplétion Zd. Autrement dit, la zone de déplétion Zd est une barrière électrostatique. II va de soi que si les surfaces des canaux sont à charge électrique de surface positive, le nanocanal 3 serait sélectif aux anions et le phénomène qui vient d'être décrit aurait été inversé géographiquement avec et les zones de déplétion et d'enrichissement se seraient trouvées du côté de la cathode et de l'anode respectivement.

Cette zone de déplétion peut agir en tant que concentrateur pour toute particule chargée.

Ainsi, pour revenir à la demande US 2011/0198225 mentionnée ci-dessus, la barrière électrostatique définie est mise en oeuvre pour amplifier le pompage d'un liquide, contrôler le flux du liquide et pour dessaler de l'eau de mer. Il est aussi prévu dans cette demande de brevet de dévier des globules blancs présents dans du sang humain dilué avec de l'eau de mer. Ici encore, comme dans un dispositif by-pass illustre en figures 2 et 3, la hauteur des nanocanaux est fixe et déterminée lors des étapes technologiques de fabrication.

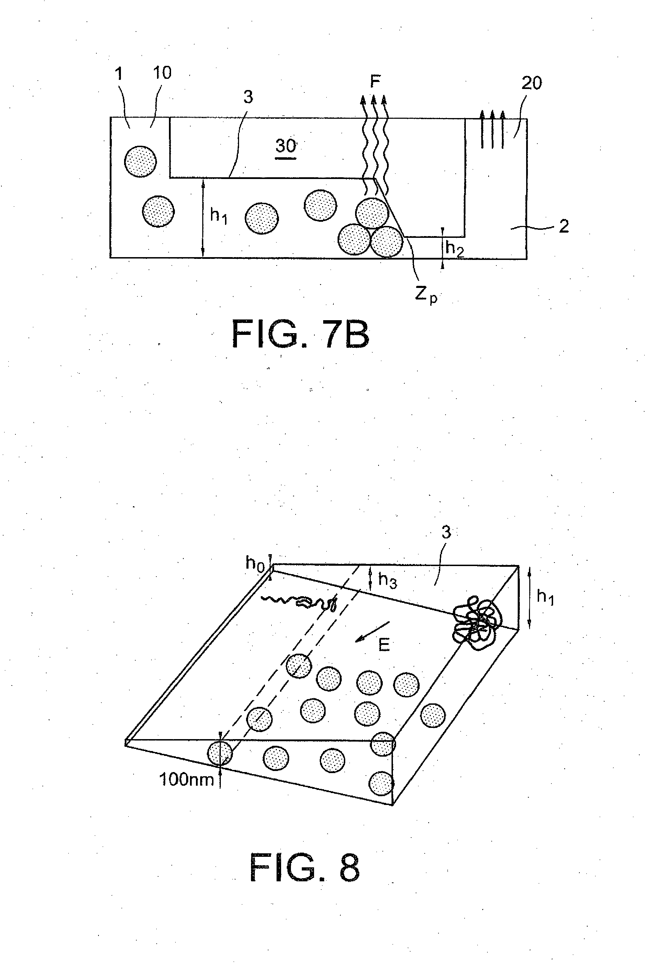

La publication [1] décrit également un dispositif by-pass permettant la filtration, la séparation et la concentration stérique de nanoparticules de polystyrène ainsi que de virus sanguin (Herpès et Hépatite B), dont la taille unitaire varie de 30 à 120 nm. On a reproduit en figures 7A et 7B les illustrations du dispositif telles que données dans la publication. Le dispositif divulgué dans cette publication [1] est constitué de deux microcanaux 1, 2 en parallèle l'une de l'autre et reliés entre eux par un nombre de l'ordre d'une centaine de nanocanaux 3 parallèles entre eux. Chaque nanocanal 3 est réalisé avec un restriction sous la forme d'un pan incliné : ainsi la hauteur du nanocanal 3 passe d'une hauteur h1 à une hauteur h3, (les autres dimensions étant par ailleurs indiquées en figure 7A). Ainsi, un analyte sous forme de nanoparticules présentes dans un liquide tampon est introduit en entrée 10 du microcanal 1 est piégé dans la zone de piégeage Zp définie par le pan incliné, le liquide tampon par ailleurs être évacué ou évaporé vers la sortie 20 du microcanal de sortie 2. Si l'analyte est marqué par une substance fluorescente, il peut alors émettre un signal fluorescent F lorsqu'il est concentré dans la zone de piégeage Zp, comme symbolisé par les flèches F en figure 7B. Autrement dit, la zone de piégeage Zp peut constituer une zone de détection à part entière. Il apparait à la lecture de la publication [1] que tout le dispositif est réalisé selon une technologie de couches sacrificielles. Les inconvénients d'un tel dispositif by-pass peuvent être énumérés comme suit :
- il est tout à fait possible d'avoir un bouchage des nanocanaux 3 au niveau de leurs restrictions Zp ;
- les volumes morts au niveau des microcanaux 1, 2 sont susceptibles d'engendrer une perte considérable des analytes à détecter;
- le remplissage des canaux par capillarité indiqué dans la publication limite nécessairement le débit de remplissage ;
- la méthode de fabrication est complexe.

Il est connu également de la publication [2], un dispositif by-pass comprenant un nanocanal 3 de forme interne pyramidale avec un gradient continu de hauteur d'environ h0 de l'ordre de 10 nm à h1 de l'ordre de 500 nm en passant par h3 de l'ordre de 100nm. Ce dispositif représenté en figure 8 permet la séparation stérique selon la taille des nanoparticules de polystyrène, le long du gradient de hauteur du nanocanal. Ce dispositif permet de réaliser la métrologie desdites nanoparticules. Il peut également permettre de créer un allongement progressif de molécules d'ADN dans le nanocanal à gradient de hauteur par effet de diminution d'entropie, les zones de confinement des molécules d'ADN ainsi allongées étant situées au niveau des hauteurs du nanocanal les plus faibles (entre h₀ et h₃ sur la figure 8). Les inconvénients d'un tel dispositif by-pass peuvent être énumérés comme suit :
- la méthode de réalisation par lithographie est complexe et laisse des rugosités de taille d'environ 15 nm, c'est-à-dire de taille non négligeable pouvant engendrer des phénomènes d'adsorption et des incertitudes sur la hauteur réelle du nanocanal;
- le fonctionnement du dispositif ne peut être assuré que selon un mode d'injection électrocinétique car les pressions à appliquer dans le nanocanal seraient trop importantes selon un mode d'injection hydrodynamique.

Le but de l'invention est alors de proposer un nouveau dispositif pour la séparation et concentration de particules présentes dans un fluide qui pallie tout ou partie des inconvénients de l'art antérieur précité.

Un but particulier de l'invention est de proposer un nouveau dispositif pour la séparation et concentration de particules d'échantillons biologiques, tels que virus, molécules d'ADN ou de synthèse, notamment destinées à des applications d'imagerie médicale.

Un autre but particulier de l'invention est de proposer un nouveau dispositif pour la séparation et concentration de particules présentes dans un fluide qui permette en outre d'obtenir une meilleure détection optique que les dispositifs selon l'art antérieur, en particulier celui divulgué dans la publication [1], lorsque les particules à détecter sont marquées par une substance fluorescente.

### EXPOSÉ DE L'INVENTION

Pour ce faire, l'invention a pour objet un dispositif pour la séparation et concentration de particules présentes dans un fluide, comprenant :
- un premier microcanal, ayant au moins une première ouverture,
- au moins un deuxième microcanal, ayant au moins une deuxième ouverture, et une extrémité ;
- le premier microcanal entourant ou, plus généralement, contournant, le deuxième microcanal (ou entourant tout ou partie du deuxième microcanal) au niveau de ladite extrémité ;
- le premier microcanal et le second microcanal sont reliés, au niveau de la dite extrémité, par au moins un nanocanal, le nanocanal formant une restriction entre le premier microcanal et le second microcanal;
- un capot, délimitant le premier microcanal, le deuxième microcanal et le nanocanal au niveau de ladite extrémité.

Le premier microcanal et le deuxième microcanal sont de référence réalisés dans un premier substrat, ladite première ouverture et ladite deuxième ouverture débouchant selon une même face, ou d'un même côté, de ce substrat. En particulier cette configuration facilite la fabrication du dispositif.

De préférence encore, la géométrie du nanocanal est figée durant une période temporelle prédéterminée.

Selon un mode de réalisation, le premier microcanal et le deuxième microcanal sont réalisés dans un premier substrat, tandis que le capot est réalisé dans un second substrat, assemblé avec le premier substrat, le nanocanal étant délimité par un espace entre le premier et le second substrat.

Le premier microcanal peut présenter deux premières ouvertures. Le deuxième microcanal peut présenter une seule deuxième ouverture. Ainsi, on peut réaliser un dispositif selon l'invention avec un nombre de trois entrées/sorties fluidiques.

Selon un mode de réalisation, la restriction entre le premier et les second microcanaux est spatialement distribuée selon une géométrie annulaire ou polygonale fermée, la liaison entre lesdits microcanaux étant réalisée par un ou plusieurs nanocanaux distribués selon cette géométrie.

Selon un mode de réalisation, le dispositif peut alors comprendre en outre une pluralité de surélévations formant plots répartis régulièrement espacés à l'intérieur de la restriction, lesdits plots étant de hauteur h₃ au plus égale à celle de la restriction, deux plots adjacents délimitant un nanocanal. Les plots peuvent être de hauteur h3 sensiblement égale à celle de la restriction formée par les nanocanaux et sont scellés au capot et constituent ainsi des plots de scellement. Alternativement, les plots peuvent être de hauteur h₃ inférieure à celle de la restriction formée par les nanocanaux et ne sont pas scellés au capot.

Avantageusement, le capot est adapté pour pouvoir être déformé en flexion sous l'action d'un actionneur. De préférence il est maintenu fixe durant une période temporelle déterminée. L'actionneur peut être au moins un actionneur électromécanique fixé sur la face supérieure du capot pour le déformer en flexion. L'actionneur électromécanique est alors de préférence un élément piézoélectrique. Il peut aussi s'agir du fluide lui-même qui par dépression ou surpression dans un des microcanaux est susceptible de déformer en flexion le capot.

Selon un mode de réalisation avantageux, le dispositif peut comprendre au moins deux restrictions formées d'un ou plusieurs nanocanaux de forme annulaire ou polygonale fermée, qui peuvent par exemple être agencées concentriquement l'une par rapport à l'autre autour d'un seul deuxième microcanal. La hauteur h3 de l'une des deux restrictions formées d'un ou plusieurs nanocanaux peut alors être différente de la hauteur h4 de l'autre des deux restrictions formées d'un ou plusieurs nanocanaux.

Selon un mode de réalisation, le dispositif peut comprendre au moins deux deuxième microcanaux et au moins deux restrictions formées d'un ou plusieurs nanocanaux de forme annulaire ou polygonale fermée, chaque nanocanal étant agencé, partiellement ou totalement, autour d'un seul deuxième microcanal.

Avantageusement, on peut prévoir que la portion à l'extrémité du deuxième microcanal et la portion du capot adjacente au nanocanal soient fonctionnalisés par la présence de ligands solidarisés à leur surface par une fonction silylée afin de capturer les particules concentrées au niveau desdites portions.

Ainsi, le dispositif pour la séparation et la concentration de particules est conçu selon une architecture clairement distincte des dispositifs de type by pass selon l'état de l'art mentionnés ci-dessus.

Par rapport à ces dispositifs by-pass selon l'état de l'art, le dispositif selon l'invention présente les avantages notables suivants :
- compacité du dispositif;
- remplissage rapide et aisé en mode d'injection hydrodynamique ou électrocinétique ;
- risque moindre de présence de bulles d'air néfastes dans le dispositif ;
- sensibilité moindre aux fluctuations de pression éventuelles ;
- amélioration de l'effet de concentration de particules car dans une zone continue annulaire localisée au lieu de zones discrètes définies chacune par la section rectangulaire d'un nanocanal ;
- augmentation du seuil de détection optique de particules chargées de substance fluorescente, en particulier pour les particules d'origine biologiques avec en corollaire une plus grande rapidité de diagnostic de maladies ;
- possibilité de séparer et concentrer en taille des particules présentant une polydispersité initiale ;
- adaptation de la hauteur du(des) nanocanal(ux) selon l'invention en fonction de la salinité de la solution liquide.

Selon l'invention, la géométrie du (des) nanocanal(ux) est figée et constante durant une période temporelle prédéterminée, qui est une période de fonctionnement du dispositif, c'est-à-dire une période pendant laquelle on réalise effectivement une concentration et séparation, voire une détection par fluorescence de particules. Comme décrit ci-après la hauteur du (des) nanocanal(ux) peut être modifiée lorsqu'on cherche à réaliser le remplissage initial du dispositif ce qui permet de réduire le temps dédié ou lorsqu'on veut séparer et concentrer des particules de taille unitaire dans une gamme différente. Autrement dit, dans le cadre de l'invention, on ne vise absolument pas à réaliser un ou plusieurs nanocanaux dont la hauteur varie en fonctionnement comme dans une pompe microfluidique.

L'invention concerne également un procédé de fonctionnement d'un dispositif pour la séparation et concentration de particules présentes dans un fluide qui vient d'être décrit, selon lequel on réalise les étapes suivantes :
a/ injection initiale d'une solution de liquide tampon par l'un des premier ou second microcanaux ;
b/ une fois que la solution de liquide tampon a atteint le nanocanal, ou déborde de ce dernier, injection de la solution liquide depuis l'autre des premier ou second canal.

Selon une variante, on réalise l'étape a/ depuis le deuxième microcanal et l'étape b/ depuis le premier microcanal.

Lorsqu'on réalise les injections de solution de liquide tampon en mode d'injection hydrodynamique, la pression dans le premier ou deuxième microcanal dans lequel est injectée initialement la solution selon l'étape a/ est de préférence supérieure à celle respectivement dans le deuxième ou premier microcanal.

On peut appliquer une pression dans l'un des premier ou deuxième microcanaux et on applique en outre une dépression respectivement dans l'autre des deuxième ou premier microcanaux.

Une fois l'étape b/ réalisée et le nanocanal rempli de la solution liquide tampon, on réalise de préférence une étape c/ d'injection d'un liquide contenant des particules à séparer et à concentrer depuis l'un des premier ou deuxième microcanal, les particules de dimension inférieure à la plus petite hauteur h3 du(des) nanocanal(ux) passant à travers celui-ci (ceux-ci) afin d'être récupérées respectivement par l'autre des deuxième ou premier microcanaux tandis que les particules de dimension supérieure à la plus petite hauteur h3 du(des) nanocanal(ux) se concentrent au moins en partie dans la portion périphérique du premier ou deuxième microcanal par lequel l'injection selon l'étape c/ a été réalisée.

On peut réaliser selon l'étape c/ une concentration d'au moins une partie des particules de dimension supérieure à la plus petite hauteur h3 du (des) nanocanal (ux) entre deux nanocanaux concentriques.

Selon un mode de réalisation avantageux, on peut réaliser une étape d/ selon laquelle on applique une différence de potentiel électrique entre les premiers et deuxième microcanaux puis on réalise l'étape c/ d'injection depuis le premier microcanal avec des particules chargées de substance fluorescente.

Le liquide injecté selon l'étape c/ est alors de préférence de l'eau déionisée et la substance fluorescente est de la fluorescéine.
Selon ce mode, on peut déformer avantageusement le capot en fonction de la salinité du liquide injecté selon l'étape c/.

Enfin, on peut réaliser l'étape c/ d'injection de liquide contenant les particules soit en mode d'injection hydrodynamique soit en mode d'injection électrocinétique.

### BRÈVE DESCRIPTION DES DESSINS

D'autres avantages et caractéristiques de l'invention ressortiront mieux à la lecture de la description détaillée faite en référence aux figures suivantes parmi lesquelles :
- la figure 1 est une représentation schématique en vue de coupe transversale d'un dispositif fluidique selon l'état de l'art comprenant un nanocanal à la jonction entre deux microcanaux ;
- la figure 2 est une représentation schématique en vue de dessus d'un dispositif fluidique selon l'état de l'art, de type by-pass, comprenant une pluralité de nanocanaux reliant entre eux deux microcanaux ;
- la figure 3 est une autre représentation schématique en vue de dessus d'un dispositif fluidique selon l'état de l'art, de type by-pass, comprenant une pluralité de nanocanaux reliant entre eux deux microcanaux ;
- la figure 4 est une représentation schématique montrant le phénomène physique de la superposition de double couche de Debye d'une solution tampon contenant des espèces chargées électriquement à proximité d'une paroi chargée électriquement ;
- les figures 5A à 5C illustrent trois situations distinctes de superposition ou non de la double couche de Debye dans un nanocanal fluidique ;
- les figures 6A à 6D illustrent en vue de coupe transversale les différentes étapes de l'élaboration du phénomène d'ICP dans un dispositif fluidique selon la figure 1 ;
- les figures 7A et 7B sont des représentations schématiques respectivement en vue de dessus et en coupe transversale d'un dispositif fluidique by-pass divulgué dans la publication [1] ;
- la figure 8 est une représentation schématique en vue en perspective d'un nanocanal d'un dispositif fluidique by-pass divulgué dans la publication [2] ;
- les figures 9 et 9A sont des représentations schématiques respectivement en vue de dessus et en vue de coupe transversale d'un premier mode de réalisation d'un dispositif de séparation et de concentration de particules présentes dans un liquide selon l'invention ;
- les figures 9A à 9C illustrent en vue de coupe transversale les deux étapes de remplissage initial du dispositif selon la figure 9 ;
- les figures 10 et 10A sont des représentations schématiques respectivement en vue de dessus et en vue de coupe transversale d'une première variante de réalisation du dispositif selon les figures 9 et 9A ;
- les figures 11 et 11A sont des représentations schématiques respectivement en vue de dessus et en vue de coupe transversale d'un deuxième mode de réalisation d'un dispositif de séparation et de concentration de particules présentes dans un liquide selon l'invention ;
- les figures 12 et 12A sont des représentations schématiques respectivement en vue de dessus et en vue de coupe transversale d'un troisième mode de réalisation d'un dispositif de séparation et de concentration de particules présentes dans un liquide selon l'invention ;
- les figures 13 à 13A sont des représentations schématiques respectivement en vue de dessus et en vue de coupe transversale d'une deuxième variante de réalisation d'un dispositif selon les figures 9 et 9A ;
- la figure 13B montre un état déformé d'un capot selon les figures 13 et 13A ;
- les figures 14 et 14A à 14B sont des représentations schématiques respectivement en vue de dessus et en vue de coupe transversale d'une troisième variante de réalisation d'un dispositif selon les figures 9 et 9A ;
- les figures 15 et 15A respectivement en vue de dessus et en vue de coupe transversale d'un quatrième mode de réalisation d'un dispositif de séparation et de concentration de particules présentes dans un liquide selon l'invention ;
- les figures 16A à 16C sont des reproductions photographique à différents instants de fonctionnement du dispositif selon les figures 15 et 15A ;
- les figures 17 à 17J illustrent en vue de coupe transversale les différentes étapes de fabrication d'un dispositif de séparation et de concentration de particules présentes dans un liquide selon l'invention.

### EXPOSÉ DÉTAILLÉ DE MODES DE RÉALISATION PARTICULIERS

Les figures 1 à 8 ont été commentées ci-dessus en référence à l'art antérieur. Elles ne sont donc pas commentées plus en détail ci-après.

Dans la description qui va suivre les termes « entrée », « sortie » « amont », « aval » sont utilisés par référence avec la direction du liquide contenant des particules dans un dispositif de séparation et de concentration des particules selon l'invention. De même, les termes « supérieur », « inférieur », « au dessus », « au dessous » sont utilisés par référence à l'orientation physique verticale du dispositif selon l'invention.

On précise que les échelles et proportions relatives ne sont pas respectées, pour privilégier la clarté des dessins.

On précise également que sauf mention contraire explicite, on décrit le remplissage des dispositifs selon l'invention en mode d'injection hydrodynamique. Mais, tous les dispositifs selon l'invention détaillés ci-après peuvent également l'être en mode d'injection électrocinétique, par exemple par électro-osmose ou électrophorèse.

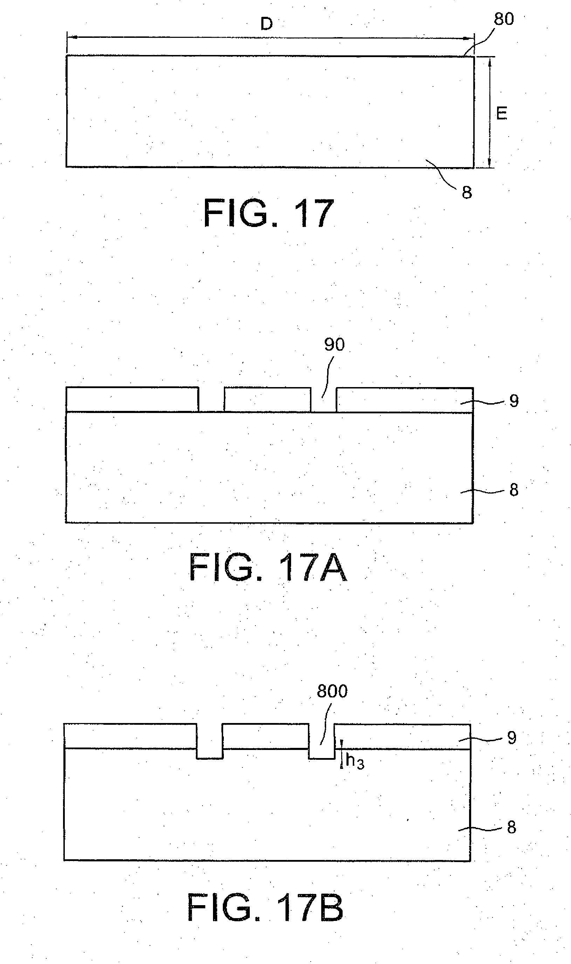

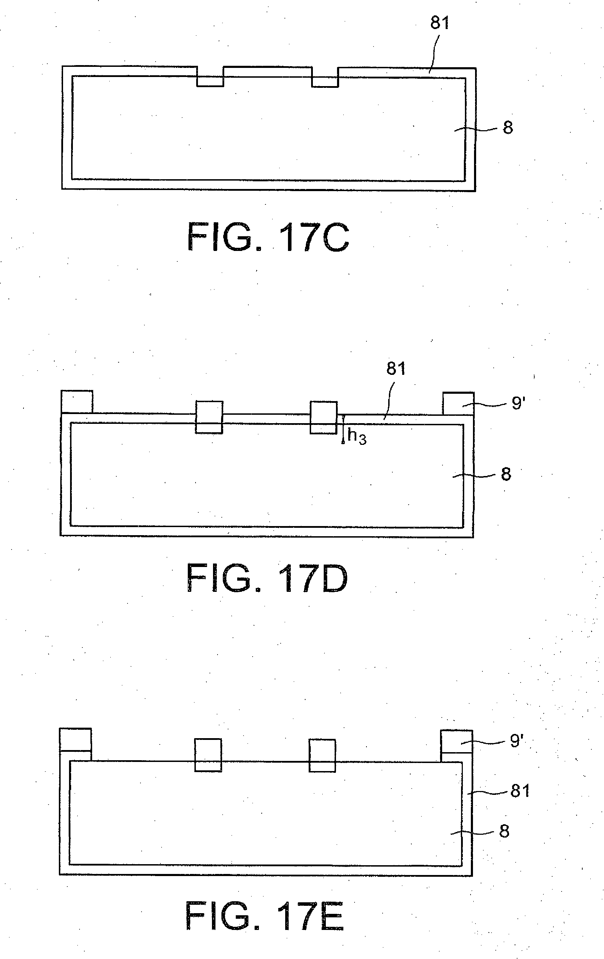

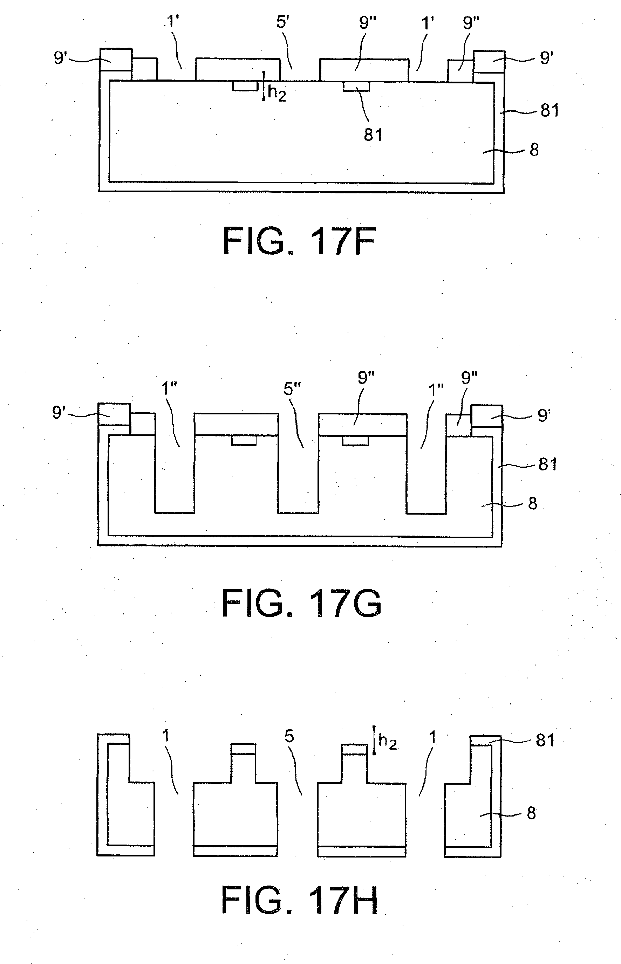

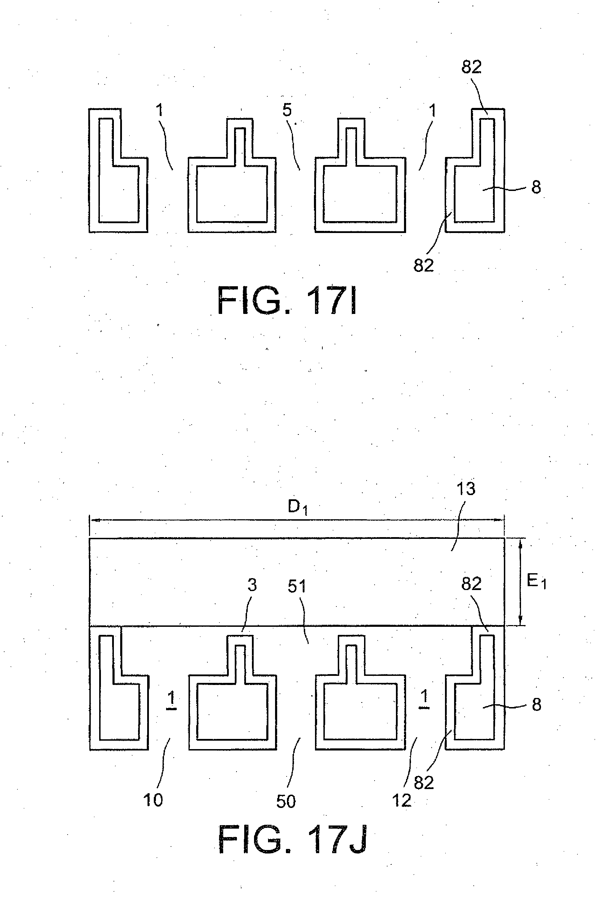

On précise également que dans l'ensemble des réalisations illustrées, les microcanaux 1, 5, 5.1, 5.2, 5.3 sont montrés avec un élargissement de section au niveau de leurs portions adjacentes aux nanocanaux 3, 3.1, 3.2, 3.2, 3.3. De fait, cet élargissement est préféré pour des raisons technologiques liées à la fabrication comme mieux décrit en référence aux figures 17 à 17J. En outre, de tels élargissements permettent avantageusement de définir des chambres, c'est-à-dire des volumes augmentés de remplissage de liquide ou de concentration de particules. Par souci de clarté, on ne les décrit pas plus en détail ci-après.

A titre d'exemple, les dimensions suivantes indiquées sur les figures peuvent être données aux microcanaux et nanocanaux selon l'invention :
- hauteur de nanocanal h3, h4, h5, h6 (h3#h4# h5# h6) : 1 à quelques centaines de nm ;
- largeur de nanocanal W1 : 50 à 100 µm;
- largeur de nanocanal W2 : 100 µm à 1mm ;
- hauteur H des portions de chambre des microcanaux : 50 à 500 µm;
- épaisseur E1 de capot : quelques centaines de µm.

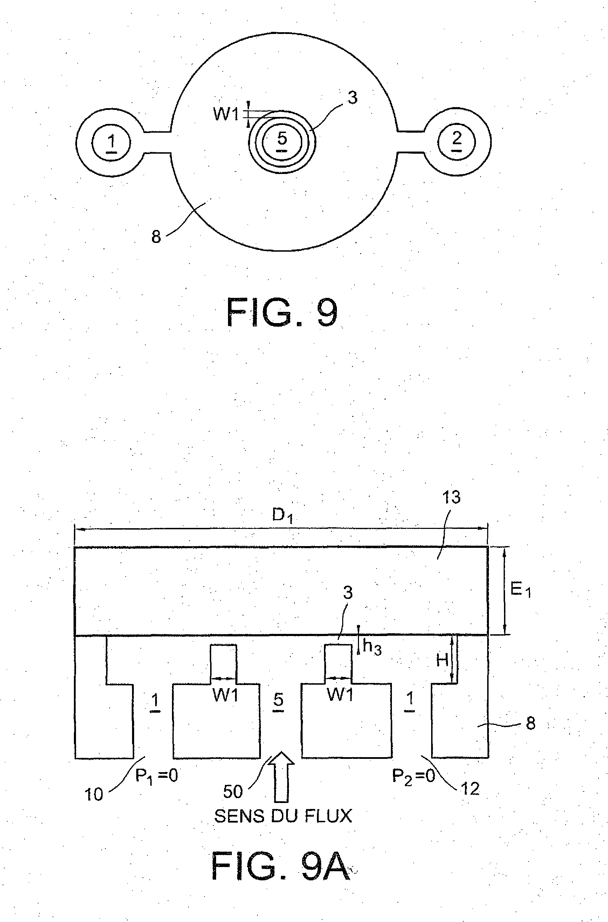

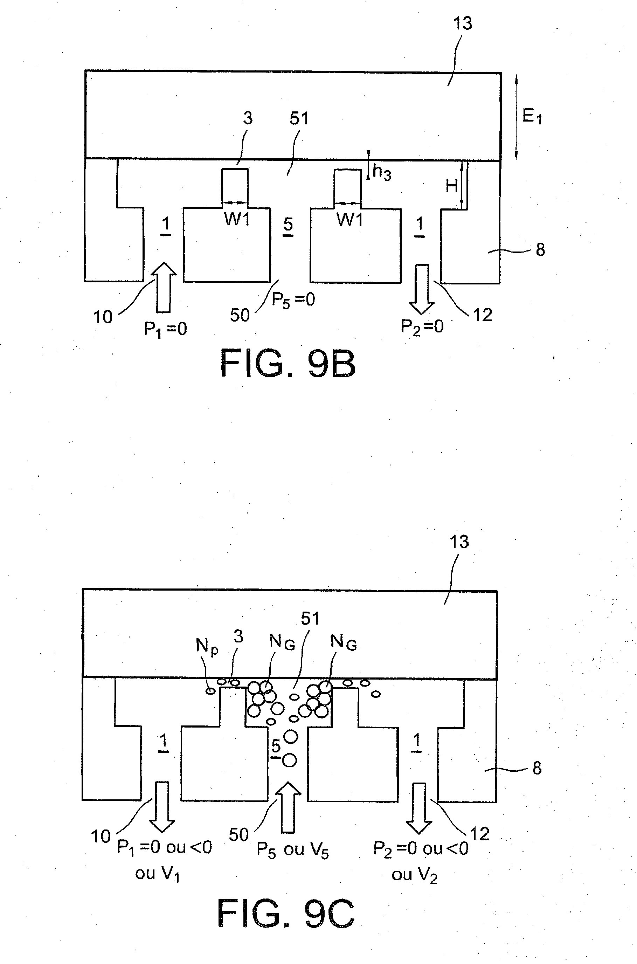

On a représenté en figures 9 et 9A un premier mode de réalisation d'un dispositif selon l'invention.

Le dispositif de séparation et concentration représenté comprend un substrat en silicium 8 assemblé par scellement avec un capot 13 en verre d'épaisseur E1.

Ils délimitent ensemble un microcanal central 5 de hauteur H qui est en communication fluidique, au niveau de son extrémité, avec un seul nanocanal 3 formant une restriction de forme générale annulaire de hauteur h3 et de largeur w1. Par extrémité du microcanal 5, on entend la zone de ce microcanal voisine du capot 13.

Le nanocanal 3 est également en communication fluidique par sa périphérie extérieure avec un microcanal 1 ayant deux ouvertures 10, 12, également de hauteur H agencés à la périphérie du dispositif. Dans le cadre de l'invention, le microcanal 1 peut ne présenter qu'une seule ouverture 10 ou 12 : dans cette variante, le microcanal 5 n'est plus alors central puisque de fait le microcanal 1 ne s'étend pas de part et d'autre du microcanal 5.

Pour permettre la séparation et concentration ultérieure de particules grâce au dispositif décrit, on procède tout d'abord à son remplissage d'une solution de liquide tampon.

Pour ce faire, le dispositif est placé sur un banc fluidique qui permet de connecter le dispositif à un générateur de pression hydraulique.

On réalise ainsi l'injection du liquide jusqu'à une pression P5 par le microcanal central 5, la pression dans le microcanal périphérique 1 restant nulle (Figure 9A). L'injection de cette solution est faite progressivement en suivant des paliers de pression afin d'éviter au maximum la formation de bulles d'air dans le microcanal central 5.

Une fois que le liquide a atteint le nanocanal 3 ou déborde de ce dernier, on réalise une injection du même liquide tampon depuis le microcanal 1, par l'une de ses deux ouvertures 10 ou 12, sous une certaine pression pour remplir complètement l'intérieur du dispositif et aussi purger les bulles d'air éventuelles (Figure 9B sur laquelle l'injection est réalisée depuis l'ouverture 10 du microcanal périphérique 1 sous une pression P1, la pression P2 dans l'autre ouverture 12 du microcanal périphérique étant nulle).

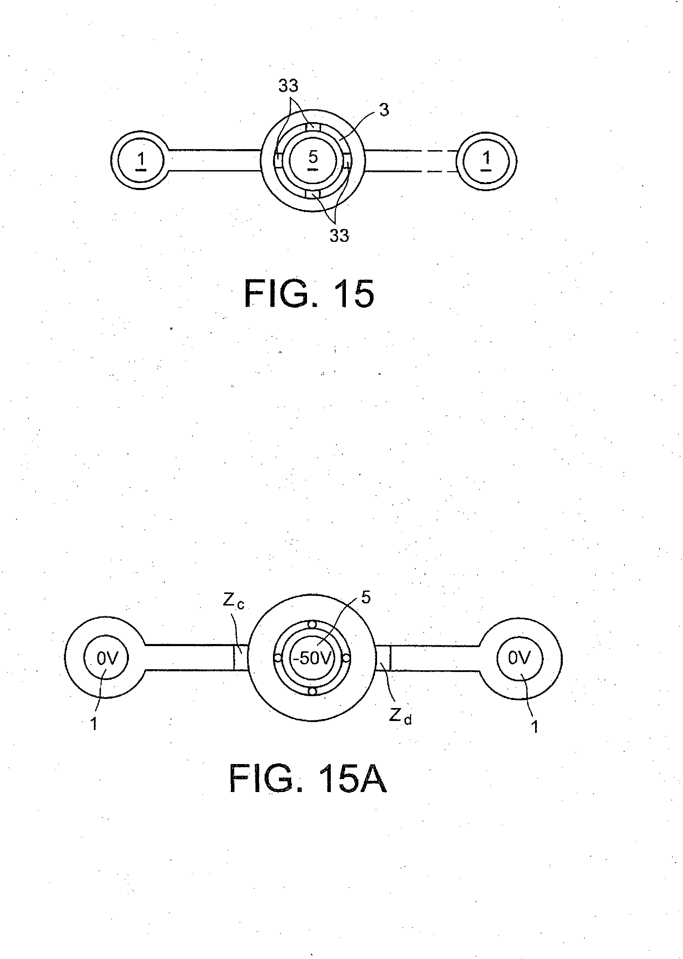

On décrit maintenant le fonctionnement du dispositif selon l'invention pour séparer et concentrer en tailles des particules, par exemple des microparticules ou des nanoparticules. Les particules considérées peuvent être d'origine biologique (ADN, Virus, bactéries, cellules, particules lipidiques etc..) ou synthétique et être marquées par un fluorophore pour permettre une détection optique comme mieux décrit en relation avec le mode de réalisation des figures 15 à 16A. Les particules considérées peuvent être chargées ou électriquement neutres.

Une fois l'intérieur du dispositif complètement rempli comme décrit comme ci-dessus, on injecte directement depuis l'ouverture unique 50 du microcanal central 5 une solution de liquide contenant des particules de taille unitaire supérieure (Ng) et inférieure (Np) à la hauteur du nanocanal 3. Durant cette opération de séparation/concentration, les dimensions du nanocanal 3 sont maintenues figées. Autrement dit, elles sont maîtrisées.

Au bout d'un certain temps d'injection, les particules de taille unitaire (Ng) supérieure au nanocanal 3 sont concentrées de façon localisée dans la portion de chambre à l'extrémité 51 du microcanal 5 où elles peuvent être détectées, notamment de manière optique. En effet, du fait de la restriction formée par le nanocanal annulaire 3, ces particules sont piégées dans le microcanal 5, dans lequel elles s'accumulent. Les particules de taille unitaire inférieure (Np) passent à travers le nanocanal 3 durant toute l'injection et peuvent être récupérées en sortie soit par l'ouverture 10 soit par l'ouverture 12 du microcanal 1 (Figure 9C).

Comme indiqué en figure 9C, le mode d'injection de la solution de liquide contenant les particules à séparer et à concentrer en gamme de tailles (Ng, Np) par le microcanal central 5 peut être hydrodynamique (P₁, P₂). Selon ce mode d'injection hydrodynamique, si l'on travaille uniquement en surpression, il faut appliquer un gradient de pression entre le microcanal central 5 et le microcanal périphérique 1 (P5>P1=P2). On peut le cas échéant également travailler en dépression dans le microcanal périphérique 1 (P1= P2 <0) pour accélérer le processus.

Par conception, le microcanal 5 central du dispositif est moins sujet aux fluctuations de pression que les dispositifs by-pass selon l'état de l'art, plus particulièrement ceux décrits aux figures 2 et 3. Ainsi, selon l'invention le fait de pouvoir concentrer les particules Ng au niveau de la portion de chambre du microcanal central 5 permet d'avoir un effet de concentration plus stable, l'effet obtenu étant peu dépendant d'éventuelles fluctuations de pression à l'entrée ou à la sortie du dispositif.

En tant qu'alternative, au lieu de procéder à l'injection des particules par le microcanal central 5, on peut également le faire par l'une des ouvertures 10 ou 12 du microcanal périphérique 1. Selon cette alternative, on récupère alors les particules Np de taille unitaire inférieure à la hauteur h3 du nanocanal 3 dans le microcanal central 5 et on concentre les particules Ng de taille unitaire supérieure à cette hauteur h3 en périphérie extérieure du nanocanal 3.

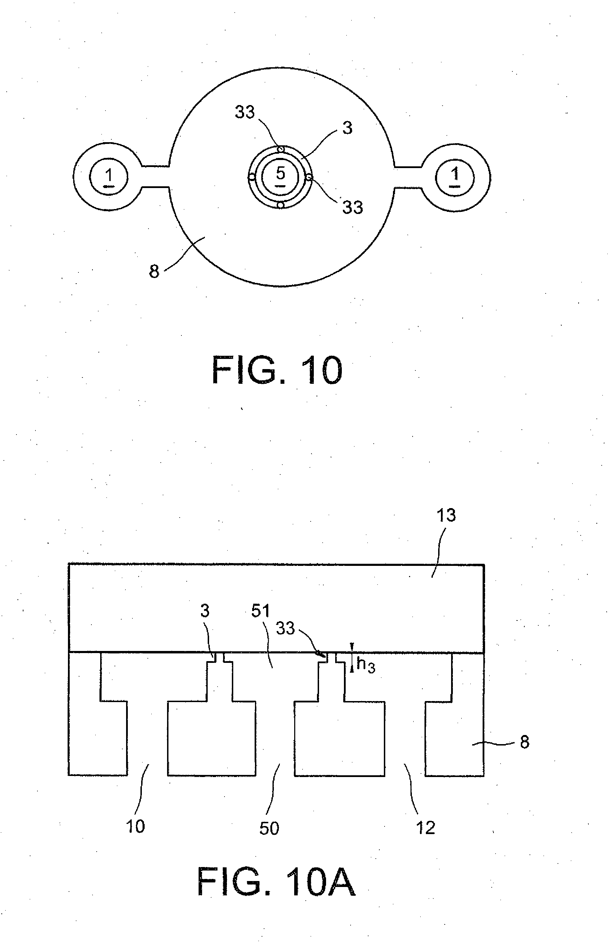

On a représenté en figures 10 et 10A, une variante de réalisation du dispositif qui vient d'être décrit selon laquelle des plots 33 de même hauteur h3 que la restriction sont répartis régulièrement espacés dans la restriction en étant scellés sur le capot 13 afin de mieux fixer la hauteur des nanocanaux 3. Ici, deux plots 33 adjacents délimitent un nanocanal 3. Une telle variante est avantageuse car elle fixe la hauteur des nanocanaux quelle que soit la pression appliquée sur le dessus du capot. Autrement dit, on s'assure de maintenir la hauteur h3 des nanocanaux 3 constante quelle que soit la pression qui est appliquée sur le capot 13.

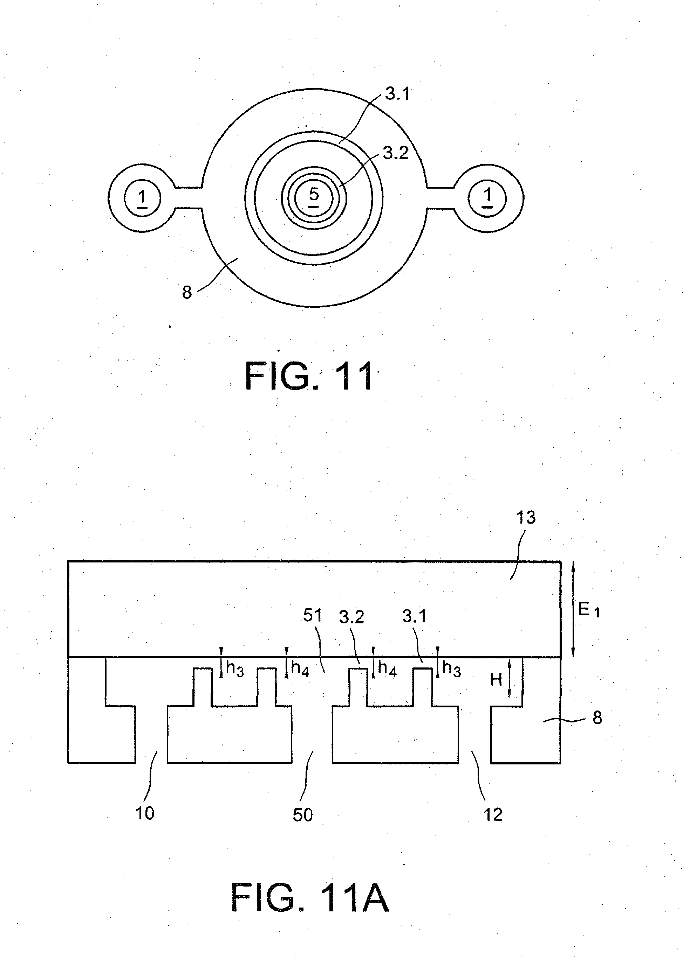

Selon un deuxième mode de réalisation, on peut on peut réaliser un dispositif selon l'invention avec plusieurs nanocanaux 3.1, 3.2 annulaires agencés concentriquement l'un par rapport à l'autre et tous autour du microcanal central 5. Les hauteurs h3, h4 des nanocanaux 3.1, 3.2 peuvent être différentes entre elles pour permettre avantageusement la séparation de particules de taille unitaire différente (Figure 11 et 11A).

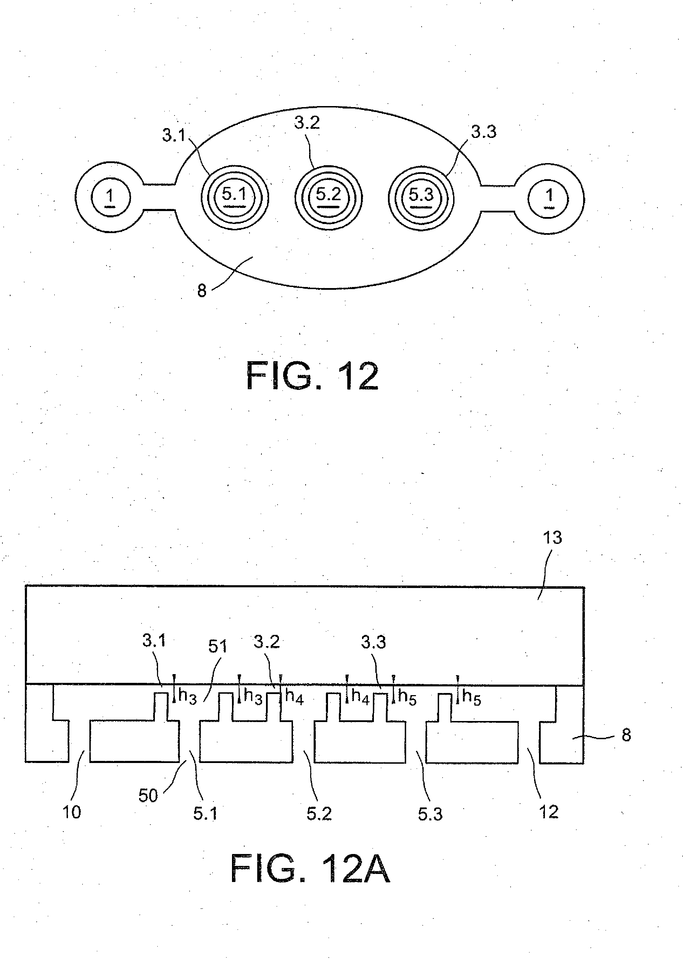

Dans un troisième mode de réalisation, on peut réaliser un dispositif selon l'invention avec plusieurs nanocanaux annulaires 3.1, 3.2, 3.3 en série hydraulique l'un avec l'autre, chaque nanocanal 3.1, 3.2, 3.3 étant agencé autour d'un microcanal central 5.1, 5.2, 5.3. Les hauteurs h3, h4 et h5 des nanocanaux 3.1, 3.2, 3.3 peuvent êtres différentes entre elles et permettent ainsi de séparer des nanparticules de différentes gammes de tailles (Figures 12 et 12A). Ce mode de réalisation est avantageux car en plaçant plusieurs nanocanaux en série hydraulique, on réalise en quelque sorte une matrice de séparation de particules, ce qui permet la séparation sur une plus grande échelle (Figures 12 et 12A).

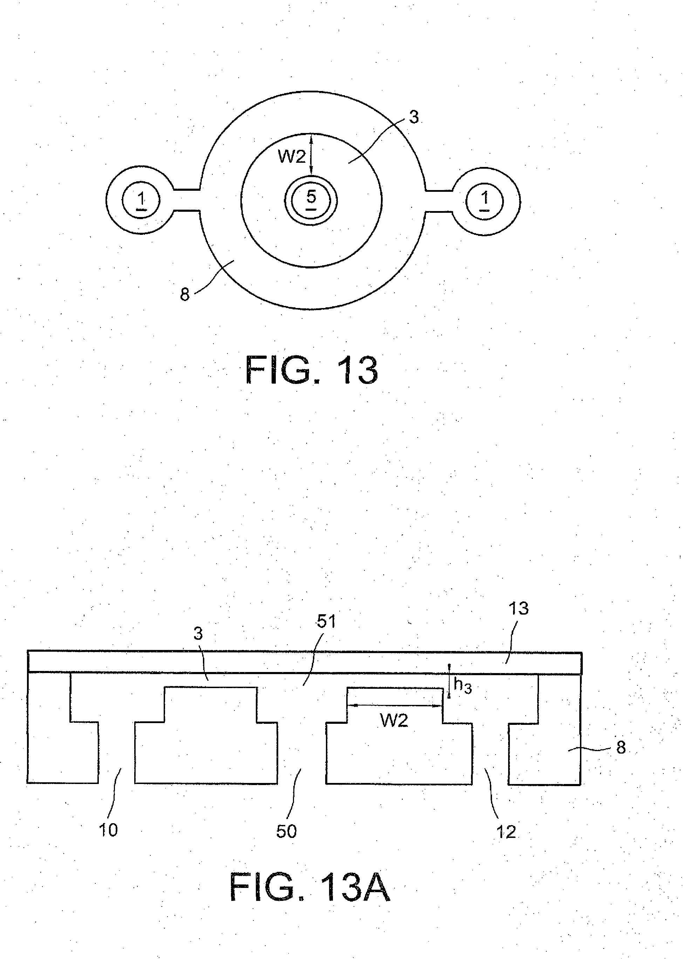

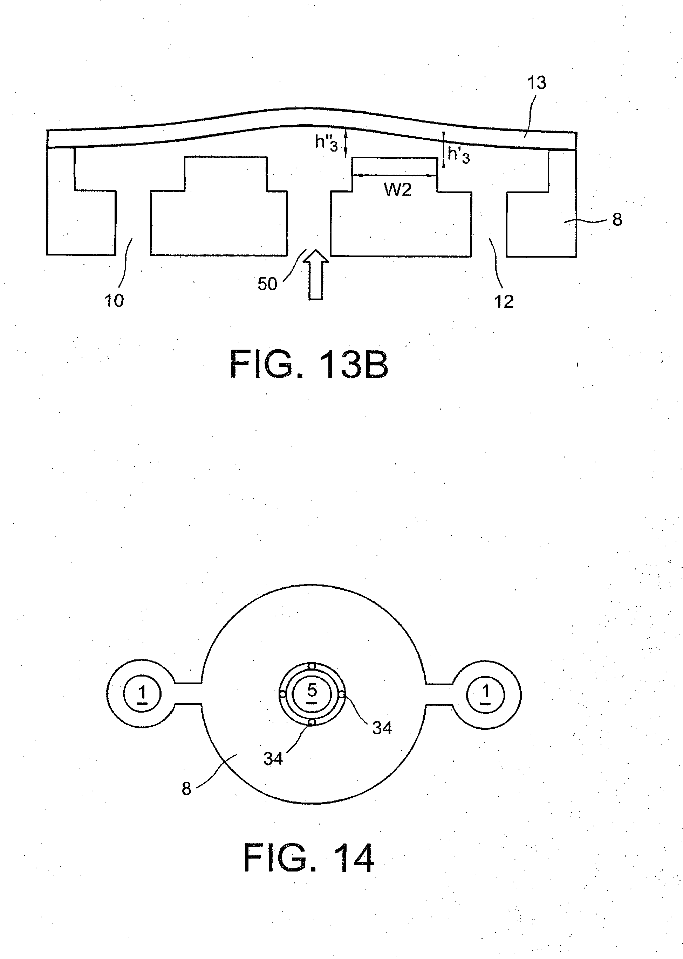

Selon une deuxième variante de réalisation, on peut réaliser un dispositif selon l'invention avec une épaisseur E1 du capot 13 amoindrie tout en augmentant la largeur W2 du microcanal (3) formé entre le microcanal 5 et le microcanal 1. Cela permet de rendre le capot 13 déformable en flexion lorsque l'on applique une pression sur le capot sous l'action d'un actionneur (figures 13 et 13A). Ainsi, il peut se créer un gradient de hauteur du nanocanal 3 en déformant le capot 13 en flexion. Ce gradient de hauteur (h3' à h3") peut être mis à profit avantageusement pour séparer des particules de taille unitaire différente (Figure 13B). Ainsi, avec un capot 13 déformable en flexion, selon la pression plus ou moins importante appliquée dans le microcanal central 5, on déforme plus ou moins le capot 13 et on génère un gradient de hauteur plus ou moins important (gradient décroissant de h3" à h3' sur la figure 13B). Une telle variante est avantageuse car, on peut séparer au cours d'une même opération des particules de tailles unitaires différentes en modulant simplement la pression appliquée sur le capot. On peut ainsi avoir un capot en verre déformable de faible épaisseur E1 et ce avec une rugosité de l'ordre de quelques angströms. Notons que selon cette deuxième variante, le recours à l'actionneur permet de maîtriser la déformation du capot, de telle sorte que la géométrie du nanocanal (3), séparant le microcanal 5 et le microcanal 1, soit figée durant une période temporelle déterminée.

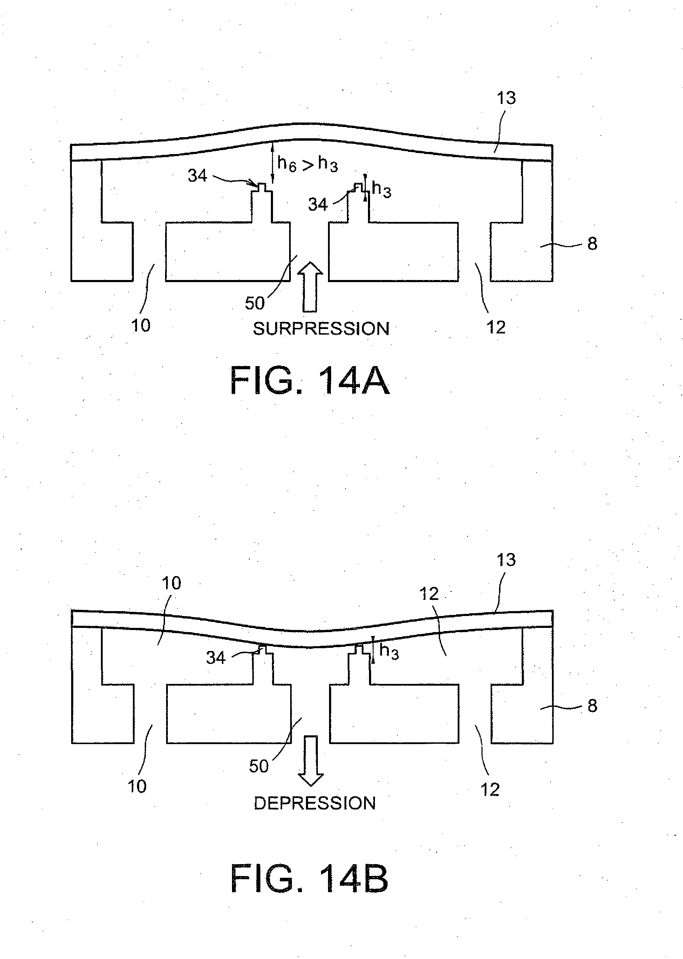

Dans une troisième variante de réalisation, on peut réaliser un dispositif selon l'invention avec un capot 13 déformable et des plots 34 de hauteur h3 inférieure à la hauteur de la restriction de géométrie annulaire 3. Ici, deux plots 34 adjacents forment un nanocanal 3, chaque nanocanal séparant un microcanal 5 d'un microcanal 1. Ces plots 34 sont réalisés lors la fabrication mieux décrite en rapport avec les figures 17 à 17J et ne sont pas scellés au capot 13. Ces plots 34 servent de butées pour contrôler la hauteur des nanocanaux 3 lorsqu'une contrainte sera appliquée sur le capot 13 (Figures 14A et 14B). Ainsi, durant une période temporelle correspondant à l'opération de séparation/concentration, la hauteur du canal reste figée et constante. Cette contrainte peut être une contrainte mécanique sur le capot 13 ou une dépression par exemple dans le microcanal central 5. Grâce à la déformation du capot 13, avantageusement en verre de faible épaisseur, on peut ainsi remplir initial plus facilement le dispositif à partir du microcanal central 5 et on purge ainsi les bulles d'air qui peuvent être piégées au niveau de ce microcanal central 5. Une fois le remplissage initial effectué, on peut appliquer une dépression dans le microcanal central 5. On obtient ainsi une séparation (filtration) des particules Np de taille inférieure à la hauteur des nanocanaux maintenue figée et constante grâce aux plots 34, ces particules passant à travers les nanocanaux 3, et une concentration des particules de taille unitaire supérieure Ng en périphérie extérieure des nanocanaux 3.

Dans les variantes des figures 13 à 14B, la déformabilité en flexion du capot 13 permet d'avoir un dispositif selon l'invention avec une grande flexibilité d'utilisation en termes de remplissage et de gammes de tailles de particules à séparer. En effet, dans ces variantes, la hauteur des nanocanaux formant la restriction de géométrie annulaire peut être rendue variable à la fois dans l'espace et dans le temps. Comme déjà indiqué, l'actionneur permettant d'obtenir la déformabilité en flexion du capot 13 peut être aussi bien un actionneur fixé sur ce dernier, tel qu'un élément piézoélectrique, ou être le fluide lui-même à l'intérieur du dispositif, par exemple le fluide en dépression dans le microcanal 5 ou en surpression dans le microcanal 1.

Dans le quatrième mode de réalisation des figures 15 à 15A, on met en oeuvre le principe physique ICP dans un dispositif selon l'invention. Ce principe avec les différentes notations ont déjà été donnés en préambule de la demande.

On utilise ici un dispositif selon les figures 10 et 10A : la hauteur h3 des nanocanaux 3 formant une restriction de géométrie annulaire est ainsi maintenue figée et constante à l'aide des plots 33 en silicium scellés au capot en verre 13.

Dans ce mode de réalisation, on injecte, par exemple, une solution de fluorescéine diluée dans de l'eau déionisée par le microcanal central 5. Lorsque la solution remplit le nanocanal 3 et déborde dans un microcanal périphérique 1, on remplit, via ce dernier microcanal 1, l'ensemble du dispositif. On applique ensuite, à l'aide d'un générateur de tension électrique, une différence de potentiel entre le microcanal central 5 et le microcanal périphérique 1 et on observe les zones de déplétion Zp et la zone Zc de concentration d'espèces chargées en fluorescéine. Puis, on applique une pression progressive depuis le microcanal périphérique 1 (figure 15A).

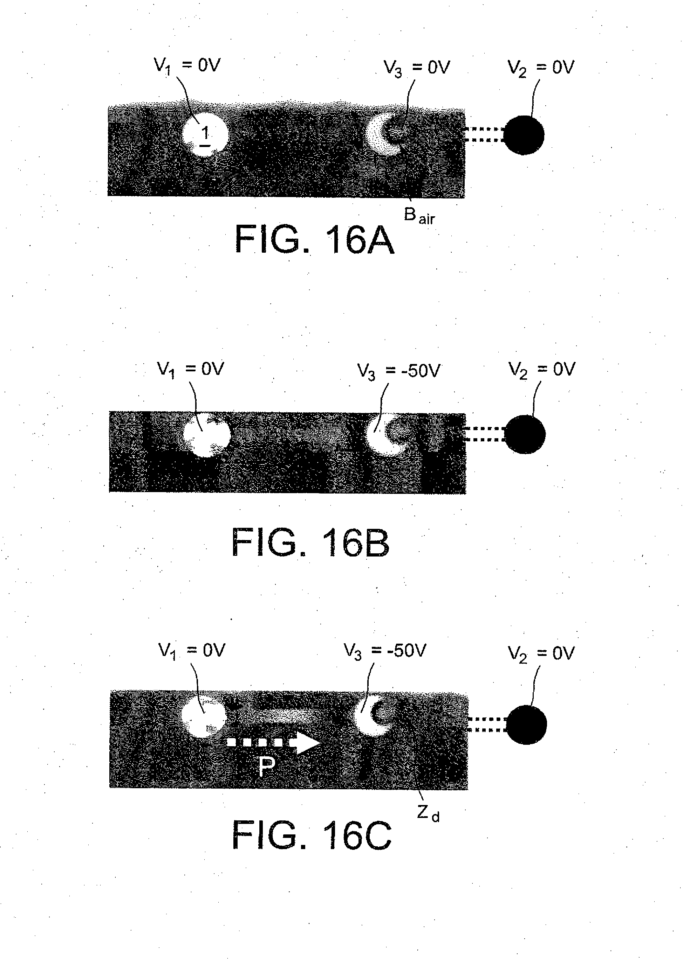

Plus précisément, on a observé à l'aide d'un microscope optique épifluorescent l'effet de concentration de la fluorescéine par le phénomène d'ICP, en relation avec les figures 15A, 15B, 16A à 16C.

Tout d'abord, on injecte une solution de fluorescéine diluée dans de l'eau déionisée par le microcanal central 5 en appliquant une pression jusqu'à une valeur de 1 bar approximativement. L'injection progressive permet d'avoir le moins de bulles d'air possible à l'intérieur du dispositif.

A cet instant tous, les potentiels électriques V1, V2, V3 des microcanaux 1 et 5 sont tous nuls (Figure 16A).

On applique alors une différence de potentiel électrique adéquate pour engendrer une zone de déplétion. Typiquement, les potentiels électriques dans le microcanal périphérique 1 sont nuls (potentiels dans les ouvertures 10 et 12 : V₁= V₂=0V) tandis que le potentiel électrique du microcanal central 5 est porté à V3= -50V. La fluorescéine étant chargée négativement, elle est repoussée à mesure que la zone de déplétion s'élargie à la périphérie extérieure des nanocanaux 3. La zone sombre observée en figure 16B au niveau des nanocanaux 3 correspond à la zone de déplétion ionique qui commence à s'étendre.

On applique alors une pression progressive de quelques mbar à l'eau déionisée depuis le microcanal périphérique 1. On observe alors une augmentation de la fluorescence au niveau de la barrière électrostatique créée par la zone de déplétion Zd, ce qui dénote un effet de concentration (Figure 16C).

Comme déjà indiqué plus haut, il est possible de faire varier la hauteur des nanocanaux 3 dans le temps et dans l'espace au sein d'un même dispositif. Cela offre une grande flexibilité d'utilisation notamment par rapport à la salinité de la solution de liquide injectée pour obtenir le phénomène physique d'ICP. En effet, si la solution est très peu salée on peut se permettre d'avoir une hauteur h3 de nanocanaux 3 d'environ 100 nm car dans ce cas les épaisseurs de doubles couches de Debye dans le ou les nanocanaux 3 sont sensiblement du même ordre de grandeur. On peut donc réaliser la superposition de ces dernières avec le(s) nanocanal(ux) pour obtenir la perméabilité sélective ionique comme montré en figure 5C et donc avoir l'obtention du phénomène d'ICP. En revanche, pour une solution très salée, il est préférable de déformer le capot 13 de façon à ce que la hauteur h3 de la restriction formée par le(s) nanocanal(ux) 3 soit plus faible et que le phénomène d'ICP s'engendre plus facilement. Ainsi, durant la durée du développement du phénomène d'ICP, la hauteur du canal doit être maintenue constante.

Pour déformer à souhait le capot 13 en flexion, on peut avantageusement fixer un actionneur électromécanique, tel qu'un élément piézoélectrique, sur la face supérieure du capot 13. On peut ainsi faire osciller celui-ci à souhait et en temps réel, et dans le mode de réalisation où l'on cherche à obtenir le phénomène d'ICP, la zone de déplétion Zp peut alors osciller dans le temps.

On a représenté aux figures 17 à 17J les différentes étapes d'un procédé de fabrication d'un dispositif de séparation et de concentration de particules selon l'invention, plus exactement celui représenté aux figures 9 et 9A.

On part d'un premier substrat 8 formé, par exemple, à partir d'une plaque de silicium polie. Typiquement, il s'agit d'une tranche usuellement dénommée en anglais « wafer » en silicium de diamètre D égal à 100 mm et d'épaisseur E de l'ordre de 500µm (figure 17).

On réalise alors une première étape de photolithographie : on dépose tout d'abord une couche de résine photosensible positive 9 de faible épaisseur sur la face supérieure 80 du premier substrat 8 puis on l'expose à une radiation lumineuse pour définir le motif de forme général annulaire 800 de nanocanal 3 créé au final (Figure 17A).

On réalise alors une première étape de gravure ionique réactive, en anglais « Reactive Ion Etching » (acronyme RIE en anglais), du premier substrat 8, pendant un temps d'une dizaine de secondes selon une hauteur h2 souhaitée pour structurer le nanocanal 3, cette hauteur h2 pouvant être comprise entre 50 à 500 nm (Figure 17B).

On réalise ensuite une première étape d'oxydation thermique du premier substrat 8, typiquement à une température comprise entre 800°C et 1200°C, et on obtient alors un masque dur de silice 81 (Figure 17C).

On réalise alors une deuxième étape de photolithographie : on dépose tout d'abord une couche de résine photosensible positive 9' de faible épaisseur sur la face supérieure 80 du premier substrat 8 puis on l'expose à une radiation lumineuse pour définir un motif recouvrant le motif annulaire 800 du nanocanal 3 créé au final et la périphérie de la face supérieure du premier substrat 8 (figure 17D).

On réalise ensuite une deuxième étape de gravure RIE pour structurer le masque dur 81 de silice nécessaire à la gravure des microcanaux créés au final. Autrement dit, on élimine par cette deuxième étape de gravure RIE les portions du masque dur 81 non recouvertes par la résine 9' (Figure 17E).

On procède alors à une troisième étape de photolithographie, on dépose tout d'abord une couche de résine photosensible positive 9" de faible épaisseur sur la face supérieure 80 du premier substrat 8 puis on l'expose à une radiation lumineuse pour définir un motif définissant les ouvertures fluidiques (figure 17F).

On réalise alors une étape de gravure sèche profonde, en anglais « Deep reactive-ion etching » (acronyme DRIE en anglais), du premier substrat 8 pour créer les ouvertures des microcanaux. Autrement dit, on créée des trous 1",5" borgne dans l'épaisseur du premier substrat 8 (Figure 17G).

On réalise alors une deuxième et dernière étape de gravure sèche DRIE pour graver finalement les microcanaux 1, 5 et les faire déboucher de part et d'autre du premier substrat 8 (Figure 17H).

On réalise alors une deuxième et dernière étape d'oxydation thermique du premier substrat 8 afin de définir une couche 82 dure d'oxyde de silicium recouvrant toute la surface du premier substrat 8 et qui assure ainsi l'isolation électrique de tous les canaux fluidiques (nanocanal 3 et microcanaux 1, 5) (Figure 17I).

La face supérieure du dispositif selon l'invention est alors scellé par une technique de scellement moléculaire avec un deuxième substrat 13, formant capot, en verre de faible épaisseur (Figure 17J). Typiquement, le capot en verre 13 a un diamètre D1 de 100mm et une épaisseur E1 de l'ordre de 500µm. L'épaisseur E1 du capot 13 peut même être inférieur à 200 µm afin qu'il soit déformable en flexion et permette ainsi comme expliqué ci-dessus soit un remplissage plus rapide des canaux fluidiques en « élargissant » le nanocanal 3 temporairement soit une évolution dans le temps de la hauteur du nanocanal 3 pour obtenir un phénomène d'ICP différencié au cours du temps.

Il va de soi que lorsqu'on souhaite avoir un dispositif selon l'invention avec des surélévations formant plots à fonction uniquement d'entretoises 33 scellées au capot 13 (figure 10A) ou à fonction de butées 34 non scellées au capot 13 pour assurer la butée de ce dernier en déformation (figures 14A et 14B), on prévoit de réaliser les étapes de fabrication qui viennent d'être décrites en conséquence.

D'autres modes ou variantes de réalisation peuvent être envisagés sans pour autant sortir du cadre de l'invention.

Ainsi, si l'on a décrit pour la fabrication d'un dispositif selon l'invention un premier substrat 8 en silicium, il peut aussi s'agir d'un substrat en verre, en matière plastique...

De même, si l'on a décrit pour la fabrication d'un dispositif selon l'invention un deuxième substrat 13 en verre, il peut aussi d'agir d'un capot en polydiméthylsiloxane (PDMS).

En outre, même si l'on ne l'a pas décrit dans la description détaillée, on peut fonctionnaliser la portion annulaire à l'extrémité 51 du microcanal central 5 et la portion du capot adjacentes au nanocanal 3 par la présence de ligands solidarisés à leur surface par une fonction silylée afin de capturer les particules concentrées au niveaux desdites portions. Autrement dit, on peut implanter au sein même du dispositif selon l'invention une zone de capture de particules par des sites fonctionnels, tels que des anticorps. Des fonctions silylées qui conviennent parfaitement pour conférer en quelque sorte la fonction de puce ADN au dispositif selon l'invention, sont celles décrites dans la demande de brevet WO 2008/006871 au nom de la demanderesse.

Bien que les cas détaillés décrivent un dispositif comprenant un microcanal 1 avec plusieurs entrées fluidiques 10, 12, ce microcanal peut ne présenter qu'une seule entrée, au détriment d'une perte de charge plus importante, tout le fluide introduit dans le microcanal devant passer par le nanocanal.

### Références citées

[1] : Mark N. Hamblin et al, Department of Electrical and Computer Engineering, Brigham Young University, USA : "Selective trapping and concentration of nanoparticles and viruses in dual-height nanofluidic channels*"*;
[2] : Samuel M. Stavis et al, National Institute of Standards and Technology-Semiconductor Electronics Division, USA : "Nanofluidic structures with complex three-dimensional surfaces*"*.

## Revendications

1. Dispositif pour la séparation et concentration de particules présentes dans un fluide, comprenant :
• un premier microcanal (1), ayant au moins une première ouverture (10, 12) ;
• au moins un deuxième microcanal (5), ayant au moins une deuxième ouverture (50), et une extrémité (51) ;
• le premier microcanal (1) contournant le deuxième microcanal au niveau de ladite extrémité (51);
• le premier microcanal (1) et le second microcanal (5) sont reliés, au niveau de la dite extrémité (51), par au moins un nanocanal (3), le(s) nanocanal(ux) formant une restriction entre le premier microcanal et le second microcanal, dont la géométrie est figée durant une période temporelle prédéterminée ;
• un capot (13) délimitant le premier microcanal, le deuxième microcanal et le nanocanal au niveau de ladite extrémité, le premier microcanal et le deuxième microcanal étant réalisés dans un premier substrat (8), ladite première ouverture (10, 12) et ladite deuxième ouverture (50) débouchant selon une même face de ce substrat.

2. Dispositif selon la revendication 1, dans lequel le capot (13) est réalisé dans un second substrat, assemblé avec le premier substrat, le nanocanal (5) étant délimité par un espace entre le premier et le second substrat.

3. Dispositif selon la revendication 1 ou 2, dans lequel le premier microcanal (1) présente deux premières ouvertures (10, 12).

4. Dispositif selon l'une des revendications précédentes, dans lequel la restriction entre le premier et le second microcanal est spatialement distribuée selon une géométrie annulaire ou polygonale fermée, la liaison entre le premier et le deuxième microcanal étant réalisée par un ou plusieurs nanocanaux distribués selon cette géométrie.

5. Dispositif pour la séparation et concentration de particules présentes dans un fluide selon la revendication 4, comprenant en outre une pluralité de surélévations formant plots (33, 34) répartis régulièrement espacés à l'intérieur de la restriction, lesdits plots étant de hauteur h₃ au plus égale à celle de la restriction, deux plots adjacents délimitant un nanocanal (3).

6. Dispositif pour la séparation et concentration de particules présentes dans un fluide selon la revendication 5, dans lequel :
- les plots (33) sont de hauteur h₃ sensiblement égale à celle de la restriction formée par les nanocanaux (3) et sont scellés au capot (13) et constituent ainsi des plots de scellement ou,
- les plots (34) sont de hauteur h₃ inférieure à celle de la restriction formée par les nanocanaux (3) et ne sont pas scellés au capot (13).

7. Dispositif pour la séparation et concentration de particules présentes dans un fluide selon l'une des revendications précédentes, dans lequel le capot (13) est adapté pour pouvoir être déformé en flexion sous l'action d'un actionneur, tout en étant maintenu fixe durant une période temporelle déterminée.

8. Dispositif pour la séparation et concentration de particules présentes dans un fluide selon l'une des revendications précédentes, comprenant au moins deux restrictions formées d'un ou plusieurs nanocanaux (3.1, 3.2) de forme annulaire ou polygonale fermée, agencées concentriquement l'une par rapport à l'autre autour d'un seul deuxième microcanal (5).

9. Dispositif pour la séparation et concentration de particules présentes dans un fluide selon l'une des revendications 1 à 8, comprenant au moins deux deuxième microcanaux (5.1, 5.2, 5.3) et au moins deux restrictions formées d'un ou plusieurs nanocanaux (3.1, 3.2, 3.3) de forme annulaire ou polygonale fermée, chaque nanocanal (3.1, 3.2, 3.3) étant agencé autour d'un seul deuxième microcanal (5.1, 5.2, 5.3).

10. Procédé de fonctionnement d'un dispositif pour la séparation et concentration de particules présentes dans un fluide selon l'une des revendications précédentes, selon lequel on réalise les étapes suivantes :
a/ injection initiale d'une solution de liquide tampon par l'un des premier ou second microcanaux (1, 5);
b/ une fois que la solution de liquide tampon a atteint le nanocanal (3), ou déborde de ce dernier, injection de la solution liquide depuis l'autre des premier ou second canal.

11. Procédé de fonctionnement selon la revendication 10, selon lequel une fois l'étape b/ réalisée et le nanocanal (3) rempli de la solution liquide tampon, on réalise une étape c/ d'injection d'un liquide contenant des particules à séparer et à concentrer depuis l'un des premier ou deuxième microcanal, les particules de dimension inférieure à la plus petite hauteur h3 du(des) nanocanal(ux) passant à travers celui-ci (ceux-ci) afin d'être récupérées respectivement par l'autre des deuxième ou premier microcanaux tandis que les particules de dimension supérieure à la plus petite hauteur h3 du(des) nanocanal(ux) se concentrent au moins en partie dans la portion périphérique (51) du premier ou deuxième microcanal (5) par lequel l'injection selon l'étape c/ a été réalisée.

12. Procédé de fonctionnement selon la revendication 11, selon lequel on réalise une étape d/ selon laquelle on applique une différence de potentiel électrique entre les premiers et deuxième microcanaux puis on réalise l'étape c/ d'injection depuis le premier microcanal (1) avec des particules chargées de substance fluorescente.

13. Procédé de fonctionnement selon la revendication 12, selon lequel le liquide injecté selon l'étape c/ est de l'eau déionisée et la substance fluorescente est de la fluorescéine.

14. Procédé de fonctionnement selon la revendication 12, selon lequel on déforme le capot (13) en fonction de la salinité du liquide injecté selon l'étape c/.

15. Procédé de fonctionnement selon la revendication 11 à 14, selon lequel on réalise l'étape c/ d'injection de liquide contenant les particules en mode d'injection hydrodynamique ou en mode d'injection électrocinétique.

## Patentansprüche

1. Vorrichtung für die Abscheidung und Konzentration von in einem Fluid vorhandenen Partikeln, enthaltend:
- einen ersten Mikrokanal (1) mit zumindest einer ersten Öffnung (10, 12);
- zumindest einen zweiten Mikrokanal (5), der zumindest eine zweite Öffnung (50) und ein Ende (51) aufweist;
- wobei der erste Mikrokanal (1) den zweiten Mikrokanal im Bereich des Endes (51) umgeht;
- wobei der erste Mikrokanal (1) und der zweite Mikrokanal (5) im Bereich des Endes (51) über zumindest einen Nanokanal (3) verbunden sind, wobei der/die Nanokanal/Nanokanäle eine Einschnürung zwischen dem ersten Mikrokanal und dem zweiten Mikrokanal bildet/bilden, deren Geometrie für eine vorbestimmte Zeitdauer fest ist;
- eine Abdeckung (13), die den ersten Mikrokanal, den zweiten Mikrokanal und den Nanokanal im Bereich des Endes begrenzt, wobei der erste Mikrokanal und der zweite Mikrokanal in einem ersten Substrat (8) ausgebildet sind, wobei die erste Öffnung (10, 12) und die zweite Öffnung (50) auf einer gleichen Seite dieses Substrats ausmünden.

2. Vorrichtung nach Anspruch 1, wobei die Abdeckung (13) in einem zweiten Substrat ausgebildet ist, das mit dem ersten Substrat zusammengefügt ist, wobei der Nanokanal (5) von einem Raum zwischen dem ersten und dem zweiten Substrat begrenzt wird.

3. Vorrichtung nach Anspruch 1 oder 2, wobei der erste Mikrokanal (1) zwei erste Öffnungen (10, 12) aufweist.

4. Vorrichtung nach einem der vorangehenden Ansprüche, wobei die Einschnürung zwischen dem ersten und dem zweiten Mikrokanal gemäß einer geschlossenen, ringförmigen bzw. polygonalen Geometrie räumlich verteilt ist, wobei die Verbindung zwischen dem ersten und dem zweiten Mikrokanal von einem oder mehreren Nanokanälen hergestellt wird, die gemäß dieser Geometrie verteilt sind.

5. Vorrichtung für die Abscheidung und Konzentration von in einem Fluid vorhandenen Partikeln nach Anspruch 4, ferner enthaltend eine Mehrzahl von zapfenartigen Erhebungen (33, 34), die gleichmäßig beabstandet innerhalb der Einschnürung verteilt sind, wobei die Zapfen eine Höhe h₃ haben, die höchstens gleich der der Einschnürung ist, wobei zwei aneinandergrenzende Zapfen einen Nanokanal (3) begrenzen.

6. Vorrichtung für die Abscheidung und Konzentration von in einem Fluid vorhandenen Partikeln nach Anspruch 5, wobei
- die Zapfen (33) eine Höhe h₃ haben, die im Wesentlichen gleich der der Einschnürung ist, die von den Nanokanälen (3) gebildet wird, und mit der Abdeckung (13) versiegelt sind und so Versiegelungszapfen darstellen, oder
- die Zapfen (34) eine Höhe h₃ haben, die kleiner als die der Einschnürung ist, die von den Nanokanälen (3) gebildet wird, und nicht mit der Abdeckung (13) versiegelt sind.

7. Vorrichtung für die Abscheidung und Konzentration von in einem Fluid vorhandenen Partikeln nach einem der vorangehenden Ansprüche, wobei die Abdeckung (13) dazu geeignet ist, unter der Wirkung eines Betätigungsglieds biegeverformt werden zu können und dabei für eine bestimmte Zeitdauer fest gehalten wird.

8. Vorrichtung für die Abscheidung und Konzentration von in einem Fluid vorhandenen Partikeln nach einem der vorangehenden Ansprüche, enthaltend zumindest zwei Einschnürungen, die aus einem oder mehreren Nanokanälen (3.1, 3.2) mit geschlossener, ringförmiger oder polygonaler Form gebildet sind und um einen einzigen zweiten Mikrokanal (5) herum konzentrisch zueinander angeordnet sind.

9. Vorrichtung für die Abscheidung und Konzentration von in einem Fluid vorhandenen Partikeln nach einem der Ansprüche 1 bis 8, enthaltend zumindest zwei zweite Mikrokanäle (5.1, 5.2, 5.3) und zumindest zwei Einschnürungen, die aus einem oder mehreren Nanokanälen (3.1, 3.2, 3.3) mit geschlossener, ringförmiger oder polygonaler Form gebildet sind, wobei jeder Nanokanal (3.1, 3.2, 3.3) um einen einzigen zweiten Mikrokanal (5.1, 5.2, 5.3) herum angeordnet ist.

10. Verfahren zum Betreiben einer Vorrichtung für die Abscheidung und Konzentration von in einem Fluid vorhandenen Partikeln nach einem der vorangehenden Ansprüche, wobei nachfolgende Schritte durchgeführt werden:
a/ anfängliches Einspritzen einer Pufferflüssigkeitslösung über einen aus erstem bzw. zweitem Mikrokanal (1, 5);
b/ nach Erreichen des Nanokanals (3) bzw. Übertreten des letztgenannten durch die Pufferflüssigkeitslösung, Einspritzen der Flüssigkeitslösung ausgehend von dem anderen aus erstem bzw. zweitem Kanal.

11. Verfahren zum Betreiben nach Anspruch 10, wobei nach dem Durchführen von Schritt b/ und nach dem Füllen des Nanokanals (3) mit der Pufferflüssigkeitslösung ein Schritt c/ des Einspritzens einer Flüssigkeit, die abzuscheidende und zu konzentrierende Partikel enthält, ausgehend von einem aus erstem bzw. zweitem Mikrokanal durchgeführt wird, wobei die Partikel mit einer Abmessung kleiner als die kleinste Höhe h₃ des/der Nanokanals/Nanokanäle durch diesen/diese strömen, um jeweils von dem anderen aus zweitem bzw. erstem Mikrokanal aufgenommen zu werden, während die Partikel mit einer Abmessung größer als die kleinste Höhe h₃ des/der Nanokanals/Nanokanäle sich zumindest teilweise in dem Umfangsabschnitt (51) des ersten bzw. zweiten Mikrokanals (5) konzentrieren, über den das Einspritzen nach Schritt c/ erfolgt ist.

12. Verfahren zum Betreiben nach Anspruch 11, wobei ein Schritt d/ erfolgt, bei dem eine elektrische Potentialdifferenz zwischen dem ersten und zweiten Mikrokanal angelegt wird, wonach Schritt c/ des Einspritzens von Partikeln, die mit einer fluoreszierenden Substanz versetzt sind, ausgehend von dem ersten Mikrokanal (1) erfolgt.

13. Verfahren zum Betreiben nach Anspruch 12, wobei die gemäß Schritt c/ eingespritzte Flüssigkeit deionisiertes Wasser ist und die fluoreszierende Substanz Fluoreszein ist.

14. Verfahren zum Betreiben nach Anspruch 12, wobei die Abdeckung (13) in Abhängigkeit von dem Salzgehalt der gemäß Schritt c/ eingespritzten Flüssigkeit verformt wird.

15. Verfahren zum Betreiben nach Anspruch 11 bis 14, wobei der Schritt c/ des Einspritzens von die Partikel enthaltender Flüssigkeit im hydrodynamischen Einspritzmodus oder im elektrokinetischen Einspritzmodus erfolgt.

## Claims

1. Device for separating and concentrating particles present in a fluid, comprising:
• a first microchannel (1), having at least one first aperture (10, 12);
• at least one second microchannel (5), having at least one second aperture (50), and an end (51);
• the first microchannel (1) surrounding at least part of the second microchannel at said end (51);
• the first microchannel (1) and the second microchannel (5) are connected, at said end, by at least one nanochannel (3), the nonochannel(s) forming a restriction between the first microchannel and the second microchannel, the geometry of which is fixed during a predetermined time period;
• a cap (13) bounding the first microchannel, the second microchannel and the nanochannel at said end, the first microchannel and the second microchannel being made in a first substrate (8), said first aperture (10, 12) and said second aperture (50) opening into a same face of this substrate.

2. Device according to claim 1, wherein the cap (13) is made in a second substrate, assembled with the first substrate, the nanochannel being bounded by a space between the first and second substrates.

3. Device according to claim 1 or 2, wherein the first microchannel (1) has two first apertures (10, 12).

4. Device according to any of the preceding claims, wherein the restriction between the first and second microchannels is spatially distributed according to a closed annular or polygonal geometry, the connection between the first and second microchannels being made by one or more nanochannels distributed according to this geometry.

5. Device for separating and concentrating particles present in a fluid according to claim 4, further comprising a plurality of block-forming extra heights (33, 34) distributed evenly spaced inside the restriction, said blocks being of a height h₃ at most equal to that of the restriction, two adjacent blocks bounding a nanochannel (3).

6. Device for separating and concentrating particles present in a fluid according to claim 5, wherein:
- the blocks (33) are of height h₃ substantially equal to that of the restriction formed by the nanochannels (3) and are sealed to the cap (13) and thus make up sealing blocks, or
- the blocks (34) are of height h₃ lower than that of the restriction formed by the nanochannels (3) and are not sealed to the cap (13).

7. Device for separating and concentrating particles present in a fluid according to any of the preceding claims, wherein the cap (13) is adapted to be capable of being flexurally strained under the action of an actuator, while being kept fixed during a determined time period.

8. Device for separating and concentrating particles present in a fluid according to any of the preceding claims, comprising at least two restrictions formed by one or more nanochannels (3.1, 3.2) having a closed annular or polygonal shape, concentrically arranged one with respect to one another around a single second microchannel (5).

9. Device for separating and concentrating particles present in a fluid according to any of claims 1 to 8, comprising at least two second microchannels (5.1, 5.2, 5.3) and at least two restrictions formed by one or more nanochannels (3.1, 3.2, 3.3) having a closed annular or polygonal shape, each nanochannel (3.1, 3.2, 3.3) being arranged around a single second microchannel (5.1, 5.2, 5.3).

10. Method for operating a device for separating and concentrating particles present in a fluid according to any of the preceding claims, according to which the following steps are carried out:
a/ initially injecting a buffer liquid solution by one of the first or second microchannel (1, 5);
b/ once the buffer liquid solution has reached the nanochannel (3), or overflows from the same, injecting the liquid solution from the other of the first or second channel.

11. Method for operating according to claim 10, wherein once step b/ is carried out and the nanochannel (3) is filled with the buffer liquid solution, a step c/ of injecting a liquid containing particles to be separated and concentrated from one of the first or second microchannel is carried out, the particles having a dimension lower than the smallest height h₃ of the nanochannel(s) passing through the latter in order to be recovered by the other of the second or first microchannel respectively, whereas the particles having a dimension higher than the smallest height h₃ of the nanochannel(s) are concentrated at least partly in the peripheral portion of the first or second microchannel (5) by which the injection according to step c/ has been made.

12. Method for operating according to claim 11, wherein a step d/ is carried wherein an electrical potential difference is applied between the first and second microchannels and then the step c/ of injecting from the first microchannel (1) with fluorescent substance-laden particles is carried out.

13. Method for operating according to claim 12, wherein the liquid injected in step c/ is deionized water and the fluorescent substance is fluorescein.

14. Method for operating according to claim 12, wherein the cap (13) is strained as a function of the salinity of the liquid injected in step c/.

15. Method for operating according to any of claims 11 to 14, wherein step c/ of injecting the liquid containing particles is carried out in an hydrodynamic injection mode or electrokinectic injection mode.
